# EUROPEAN PATENT SPECIFICATION

(11) **EP 0 756 731 B1**
(45) Date of publication and mention of the grant of the patent: **07.10.1998**
(21) Application number: 95916843.6
(22) Date of filing: 21.04.1995
(51) Int. Cl.: G06F 17/60, G06F 17/30

(54) **INTERACTIVE INFORMATION SELECTION APPARATUS**
INTERAKTIVES GERÄT ZUR AUSWAHL VON INFORMATION
APPAREIL INTERACTIF DE SELECTION D'INFORMATIONS

(30) Priority: 21.04.1994 NL 9400643
(43) Date of publication of application: 05.02.1997
(73) Proprietor: RECEPT'OMAAT C.V., 4841 CH Prinsenbeek (NL)
(72) Inventor: VAN LOOSBROEK, Albert, Adriaan, Maria, NL-4841 CH Prinsenbeek (NL)
(74) Representative: Schumann, Bernard Herman Johan
(86) International application number: NL9500147
(87) International publication number: WO9529453

(56) References cited:
- GB-A- 2 181 627
- US-A- 5 237 157
- ELEKTRONIK, vol. 40, no. 23, 12 November 1991 MUNCHEN DE, pages 42-45, E. SCHMIDT : 'Der gläserne Verbraucher'
- CHAIN STORE AGE EXECUTIVE, vol. 64, no. 9, September 1988 USA, pages 57-58, 'Lucky uses high-tech kiosks for advantage'

## Description

The invention is aimed at stores such as supermarkets where diverse types of food products are sold. The object of the invention is to provide an apparatus containing information relating to products, wares and articles available in the store in addition to information relating to dishes which can be prepared with such wares, products and articles. Such an apparatus must be adapted according to the invention to enable each consumer to make his own choice with simple operation such that at the end of a selection procedure all relevant data is available.

In respect of the above the invention provides an interactive information selection apparatus comprising:
memory means in which all necessary information relating to at least one dish consisting of a number of components is stored spread over a number of hierarchical levels;
first display means for displaying in each case a list of options corresponding with one level, one of which options at a time can be selected by a user;
selection means which can be operated by a user and which are adapted, after a start instruction and on the basis of menu control, to address that part of the memory containing partial information relating to the selected option;
which memory means are adapted to activate the following level after addressing of the said memory part until the final level is reached and are also adapted to store each selected option; and
second display means for displaying all relevant information present in the memory corresponding with all selected options.

The apparatus is preferably embodied such that the first display means comprise a screen. A screen anyway provides practically unlimited possibilities in respect of presenting information. Such information can consist of text, numbers and/or other patterns which can enhance the provision of information to the consumer.

A strongly recommended embodiment is that in which the screen is a touch screen and also forms part of the selection means. A touch screen is per se known. Particularly in the case of computer systems operating with menu control it is possible by touching a particular part of the screen with the finger to address the corresponding part of the information present in the program and/or memory for further processing. It is noted that alternatively each selection option of a list presented at a particular moment can be designated for instance with a number or letter. Press keys or the like can in this case be arranged in the vicinity of the screen with which the consumer can inform the apparatus of his selection. The use of a touch screen is however deemed an aesthetically much more attractive possibility.

After the consumer has made known his complete choice to the apparatus, all relevant information can be displayed on the screen, LCD-display or the like. The convenience of the potential purchaser is best suited with an embodiment in which the second display means comprise a printer for generating a copy on paper of the said relevant information.

A specific variant is that wherein the said relevant information comprises information about the wares, products and/or articles for purchase and information concerning method(s) of preparation.

In yet another embodiment the apparatus has the special feature that the said relevant information comprises information about prices.

Yet another embodiment has the special feature that the said relevant information comprises information concerning the composition of the products and/or articles and/or the nutritional properties thereof.

Still another embodiment has the special characteristic that the said relevant information comprises information concerning the location in the store or supermarket in which the apparatus is situated where the user can find the relevant products and/or articles.

In this latter case, particularly for the buyer in a hurry, the apparatus can have the feature that the said relevant information contains information concerning the for instance shortest route to be followed by a user through the store or supermarket.

In order to encourage the use of the apparatus according to the invention by the consumer an economic stimulus can be incorporated into the apparatus. Such an apparatus has the special feature that the printer can print a discount card for discounting when payment is made for the purchased products and/or articles. During the purchase of products, wares or articles which can be acquired by the consumer as part of his selections, an adjustment with the printed discount card takes place when payment is made at a cash-point such that the purchased products can be paid for by the buyer at a reduced price. In a specific embodiment the apparatus has the special feature that the apparatus is coupled to a central stock control and administration computer. Such an embodiment is particularly practical for central administration of information concerning prices and the availability of products, wares and articles.

A very attractive apparatus has the special characteristic that the second display means are also the first display means, photos of prepared components of dishes are included in the memory and after a selection the associated photo is ready for display on the screen such that after the final selection has been made the photos are displayed as composite photo on the screen. Particularly in the case where the screen is a color screen the selection made can be visually presented to the consumer in a very attractive manner.

An apparatus is generally recommended which comprises hardware interacting with program means.

In respect of the making of the successive choices by the potential buyer it is noted that the apparatus must preferably provide the option each time a selection has been made by the user of allowing the selection to be confirmed or of giving an error message, in which case the selection can be cancelled and the previous hierarchical level can be restored.

The article from "Chain Store Age Executive, vol.64, no.9, september 1988 U.S.A., pages 57-58, "Lucky uses high-tech kiosks for advantage" discloses an inter-active information selection system comprising first display means including a touch screen for displaying hierarchically leveled menus, with each menu, after a start instruction (interruption of the so-called teaser loop) and on the basis of menu control, displaying a list of options, one of which options can be selected by a user at a time, and second display means (touch screen or ATM-printer) for outputting the data base record requested by the respective sequence of selected options.

From this description it appears that this prior document does not disclose the basic and essential combination of features according to the invention.

The invention will now be elucidated with reference to the annexed drawings, wherein:
figure 1 shows a perspective view of an apparatus according to the invention in ready-for-use situation;
figure 2 is a highly simplified schematic example of a possible arrangement for the purpose of elucidating the selection options provided by the apparatus according to the invention;
figures 3-17 show the respective patterns presented on the screen corresponding with the blocks III-XVII according to figure 2;
figure 18 is a view corresponding with figure 1 of the end situation in which a copy of all relevant information relating to the total selection is made by an internal printer and generated by the apparatus;
figure 19a shows an example of the first part of a printed card;
figure 19b shows the continuation of the card of figure 19a;
figure 20 shows an example of a discount card;
figure 21 shows a flow diagram corresponding with figure 2, wherein the functional blocks are designated with Roman numerals corresponding with the numbering of the figures following hereinbelow;
figure 22 shows a view corresponding with figure 3;
figure 23 shows a view corresponding with figure 4;
figure 24 shows a view corresponding with figure 5;
figure 25 shows a view corresponding with figure 6;
figure 26 shows a view corresponding with figure 7;
figure 27a shows a view corresponding with figure 9;
figure 27b shows a view of the presentation following on from figure 27a;
figure 28 shows a view following on from the presentation of figure 27b;
figure 29 shows a view following on from the presentation of figure 28;
figure 30 shows a view as according to figure 11;
figure 31 shows a view of the screen during the wait period at the end of the cycle;
figure 32 shows a view corresponding with figure 13;
figure 33 shows a view corresponding with figure 14;
figure 34A shows a view corresponding with figure 15;
figure 34B shows a view of the presentation following on from figure 34A;
figure 35 shows a view corresponding with figure 16;
figure 36 shows a view corresponding with figure 17; and
figures 37-42 show respective patterns presented on the screen and corresponding with the blocks according to figure 21 numbered with the corresponding Roman numerals.

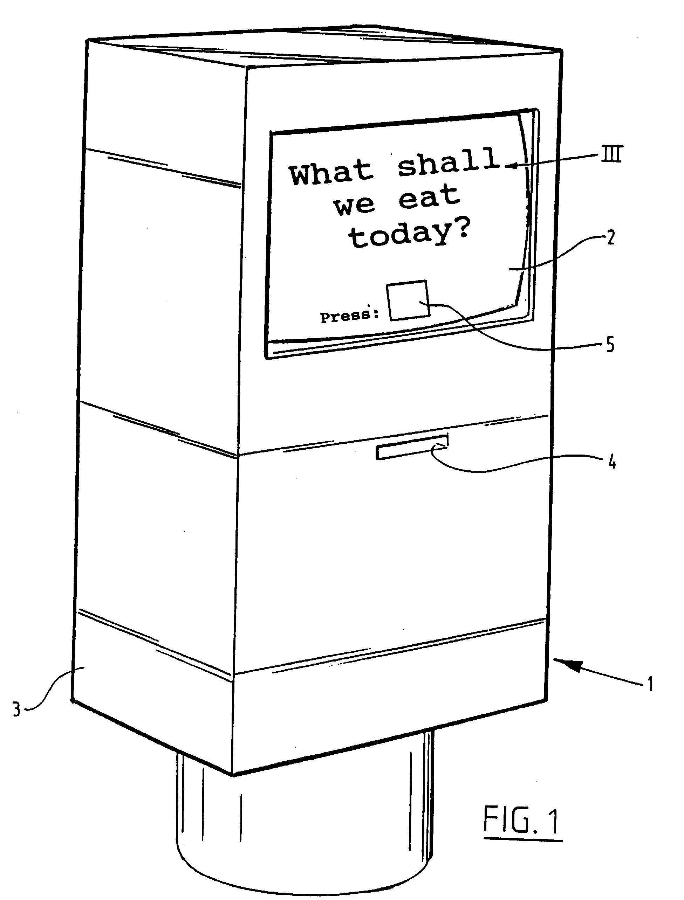

Figure 1 shows an interactive information selection apparatus. The apparatus 1 comprises a touch screen 2 and electronic means (not shown) incorporated in a housing 3 and consisting of hardware and software operating therein. The housing further has a delivery opening 4 on the front side for delivering a card printed by a printer.

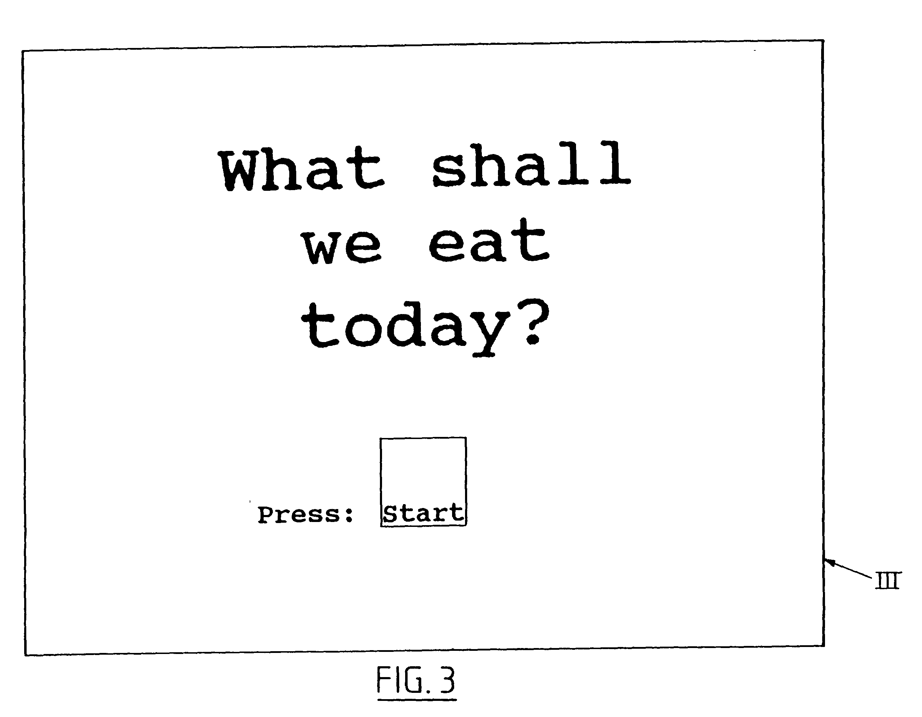

Figure 1 shows the ready-for-use rest situation, wherein for instance the text "What shall we eat today?" is displayed on the screen. In order to give a start instruction the consumer places his finger on a position indicated by a box 5. Reference is also made in this respect to figure 3.

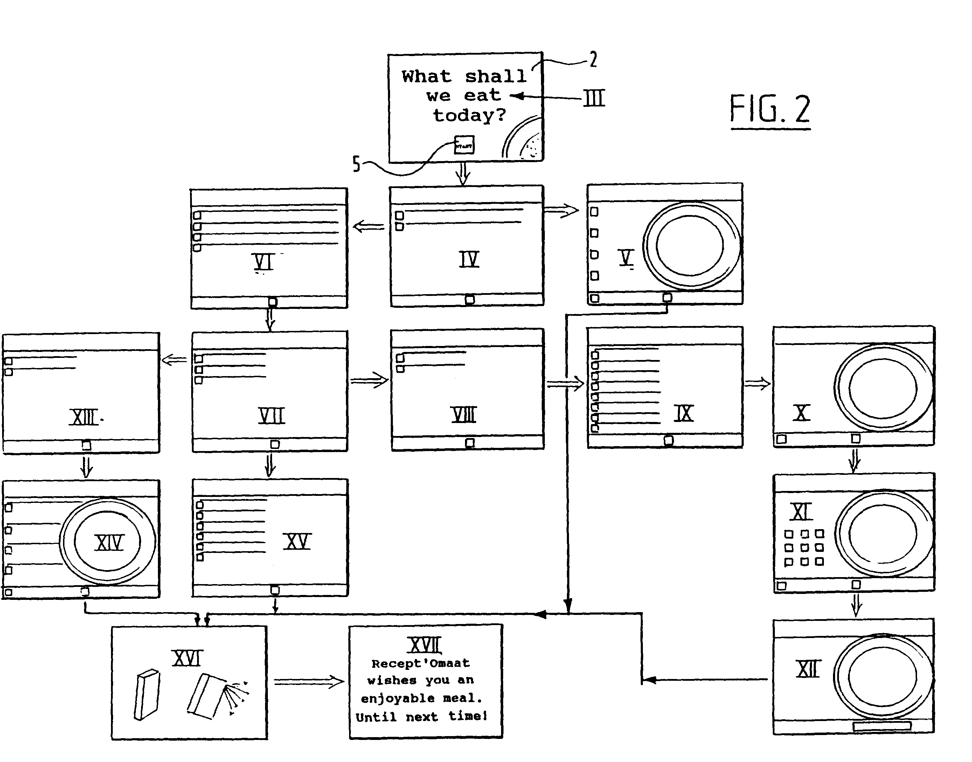

In accordance with the diagram of figure 2 the image according to figure IV is then presented on the screen. Subject to the selection made, which is displayed on the screen with box 1 or 2, the following screen is presented as according to figures V and VI. Screen IV also offers the option of taking a step back by touching the relevant part of the screen.

The different screens show texts with selection options. After selection of an option this option is processed by the system and a switch is made to a following hierarchical level.

Other screens, in particular screens V, X, XI, XII and XIV moreover provide photos of the selections made.

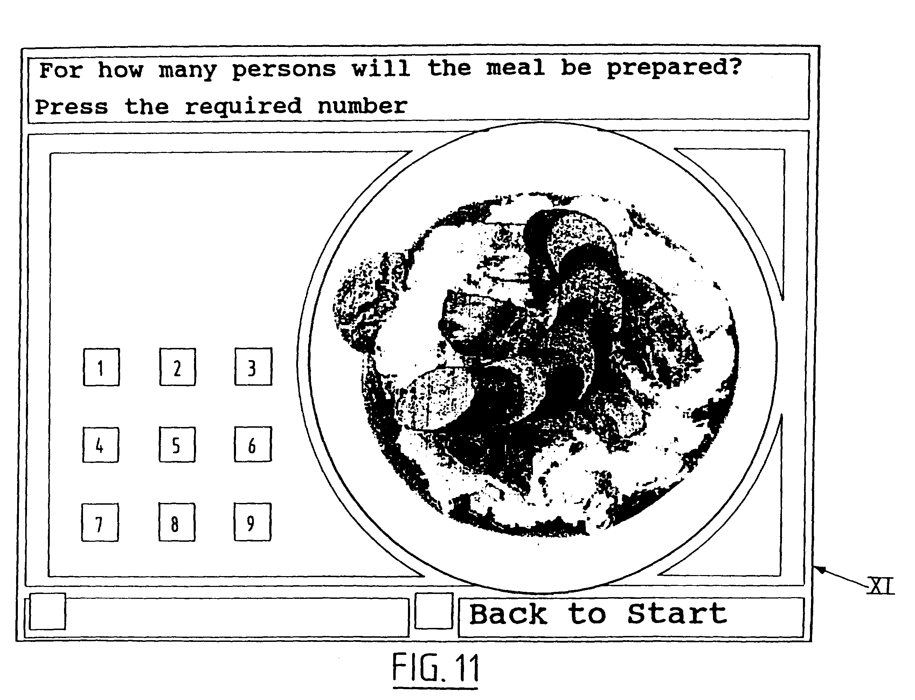

Figure 11 provides the option of selecting the number of persons for which the meal is to be prepared. This information is used by the apparatus to present to the buyer, after the final selection has been made, the correct quantities of products, wares and articles to be purchased.

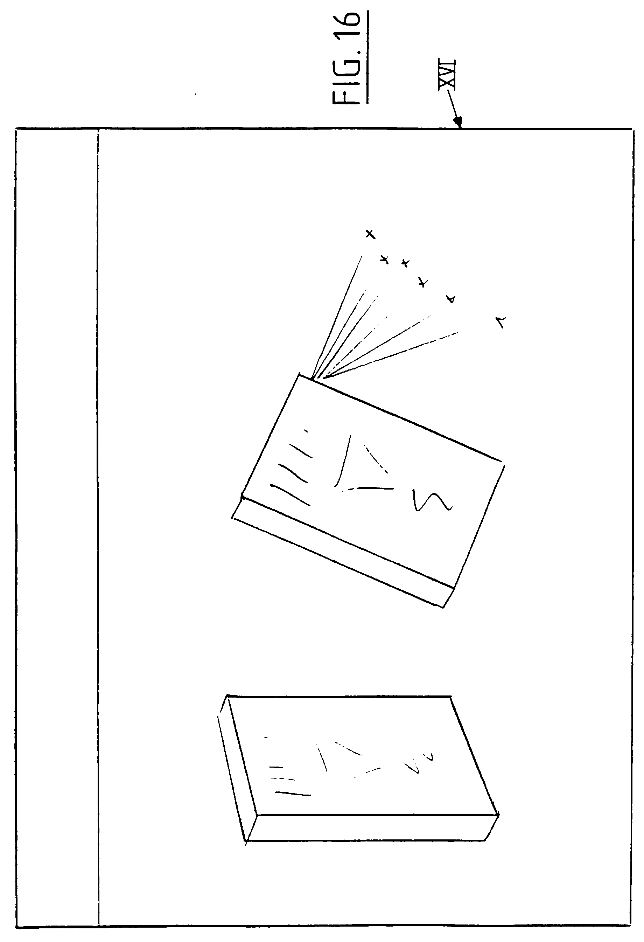

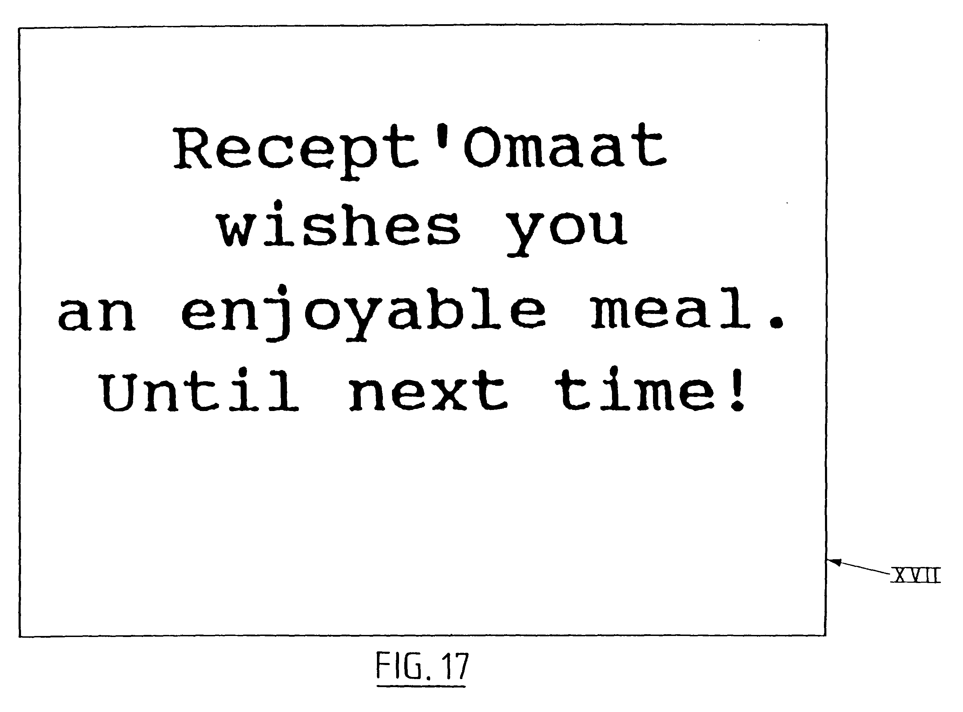

After the buyer has made his definitive choice the apparatus requires some time to process all data and to print the relevant card. This required time is utilized to present for instance an advertising message, see figure 16, in which the screen XVI is displayed. When the printed card or cards and optionally also a discount card have finally been printed, the apparatus announces the ending of the cycle by for instance displaying on the screen a text as according to figure 17. The screen XVII now displays the text "Recept'Omaat hopes you enjoy your meal. Until next time!".

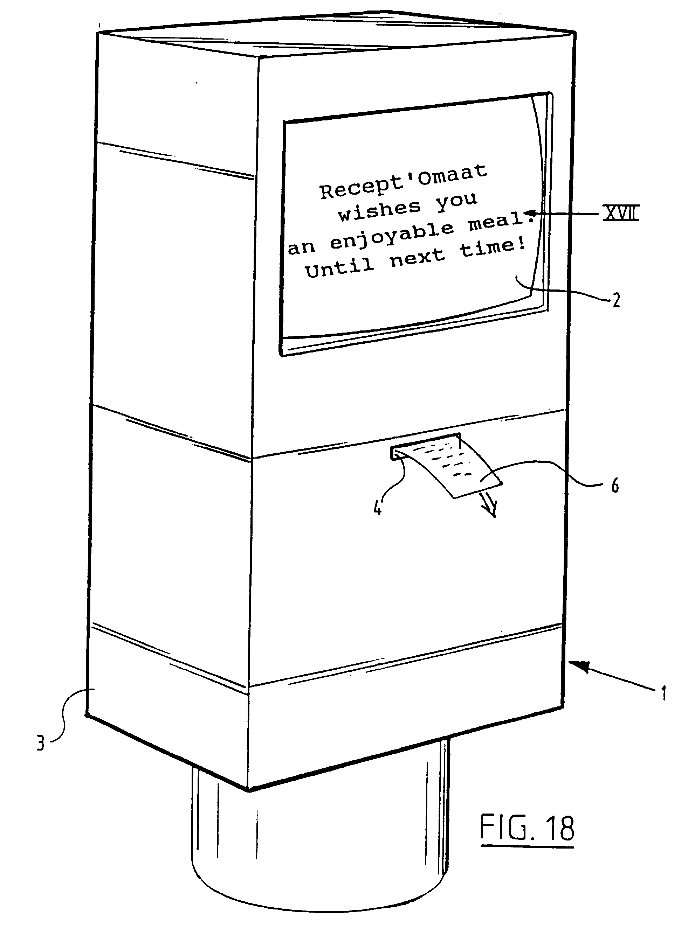

Figure 18 shows the apparatus 1 in this situation, wherein a card 6 is generated and the apparatus is ready to return to the ready-to-start situation as according to figure 1.

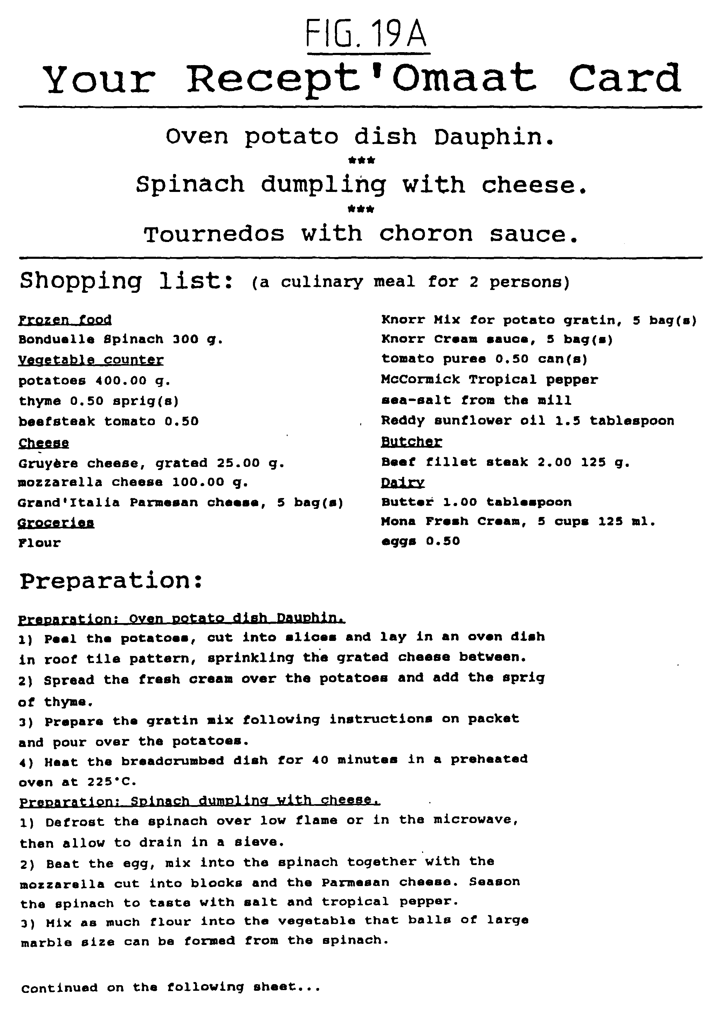

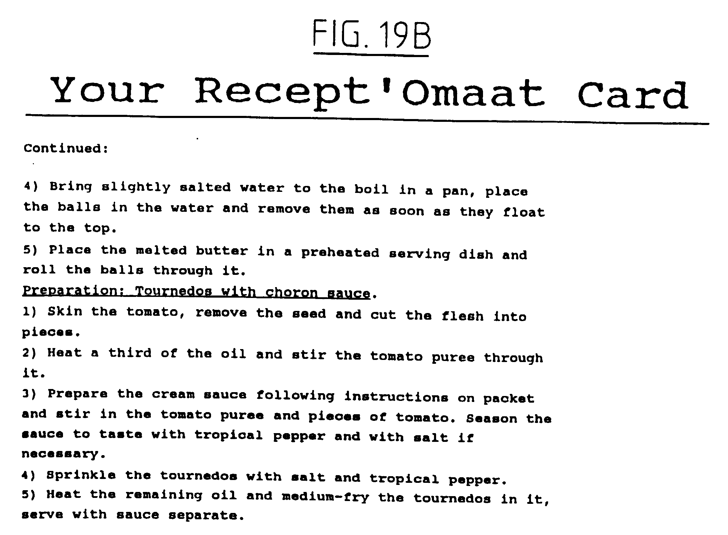

Figures 19a and 19b together show a card which comprises all relevant information for the purchase of the required products, wares and articles for the selection made. The card also indicates in the manner of a cook-book a possible method of preparation for the selections made.

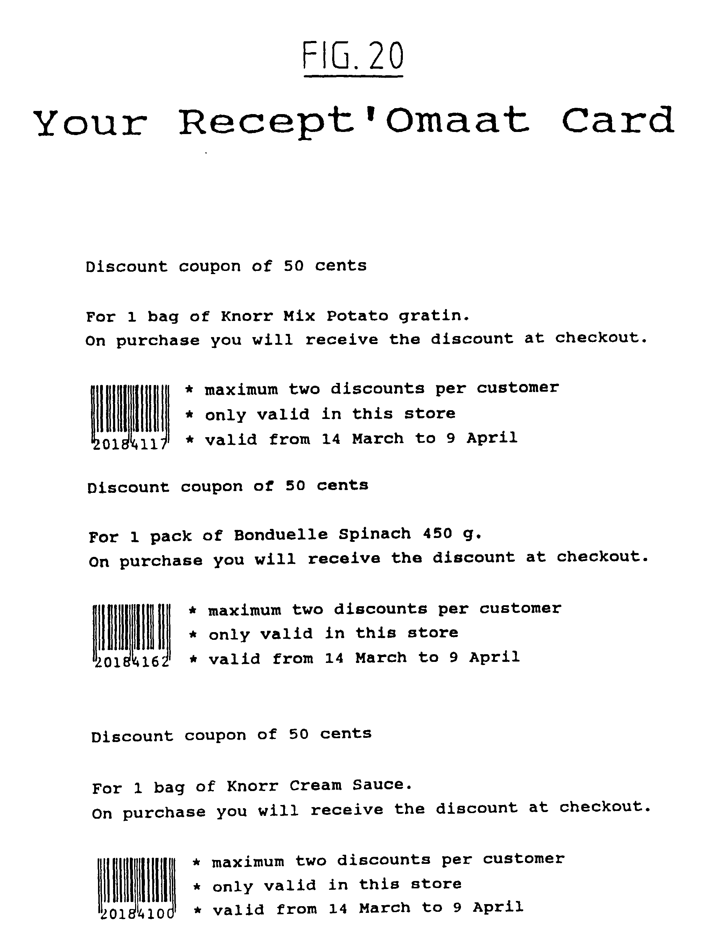

Figure 20 shows a discount card printed by the internal printer. This discount card must be processed at the cash-point. In this respect each discount information block bears a bar code which can be processed automatically by a laser scanner at a computerized cash-point.

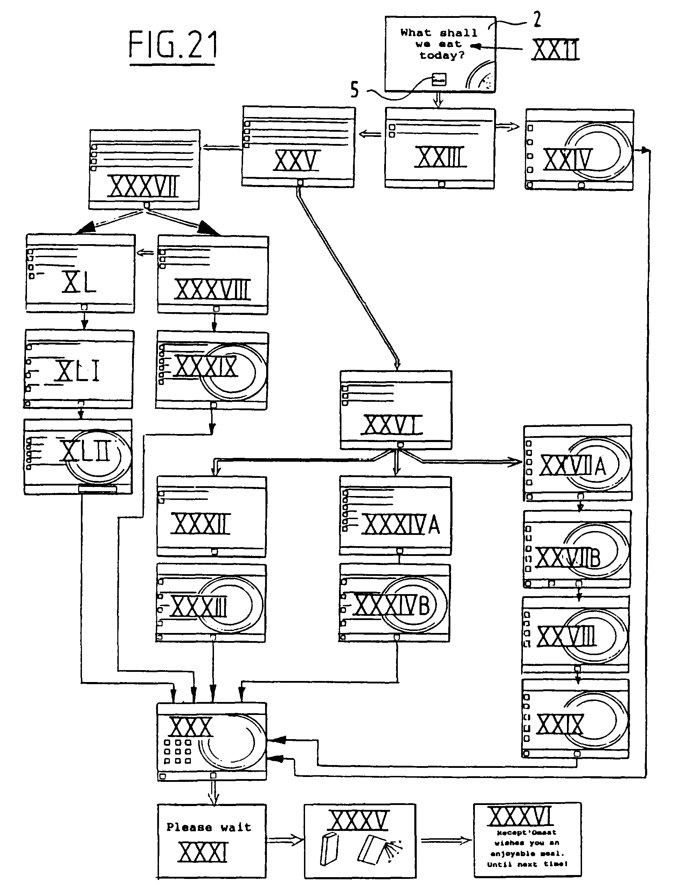

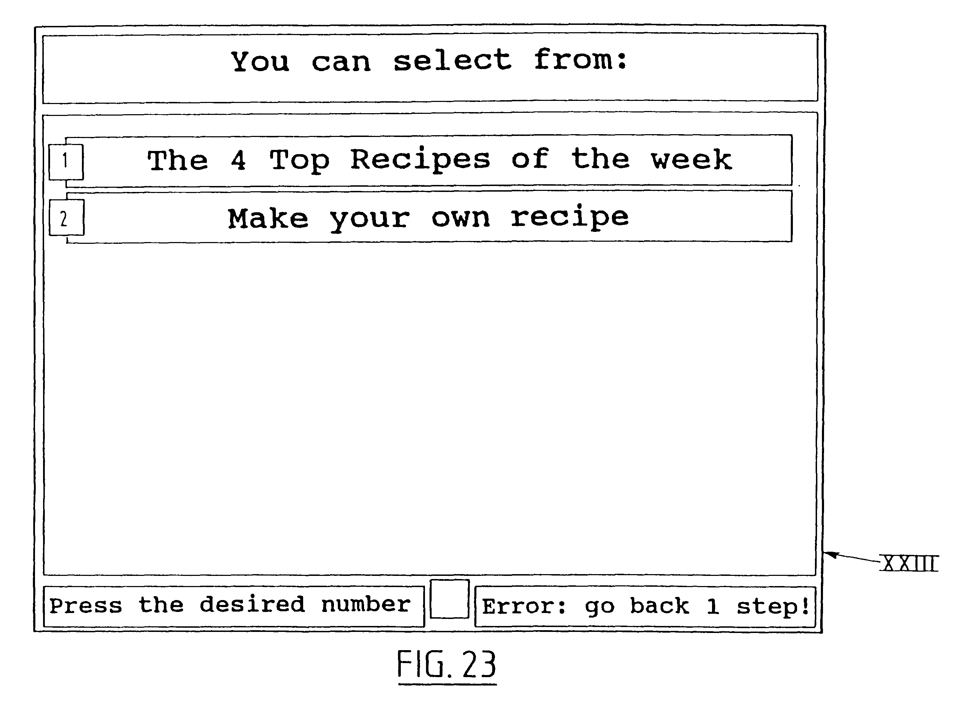

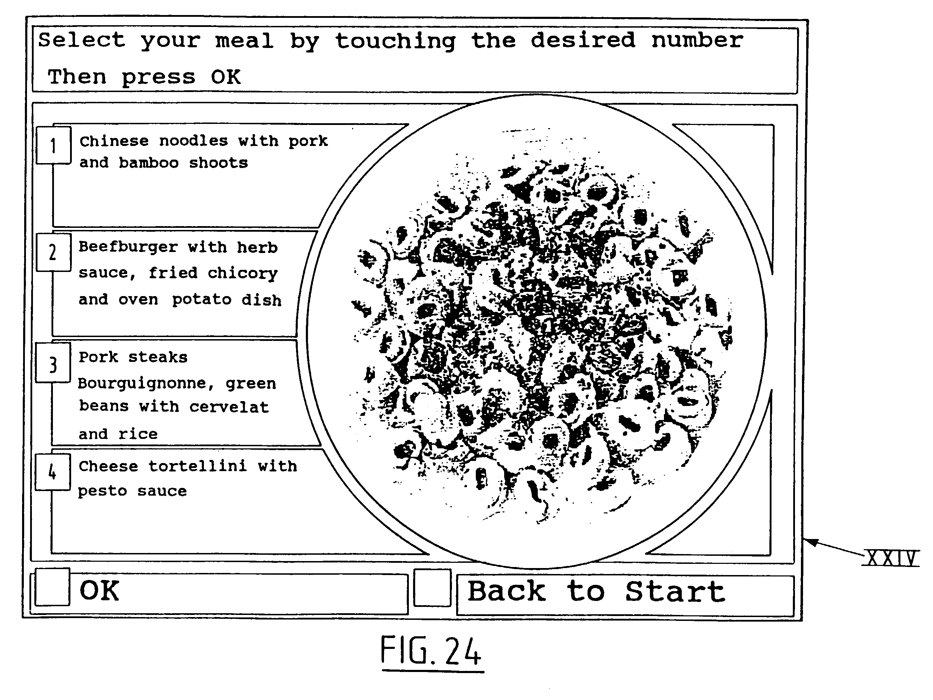

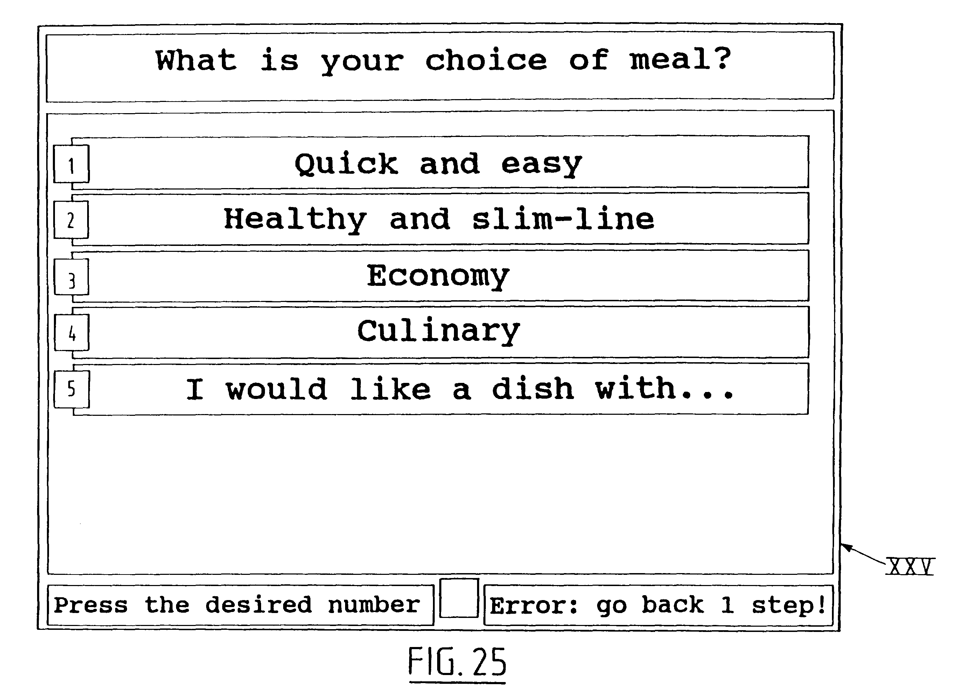

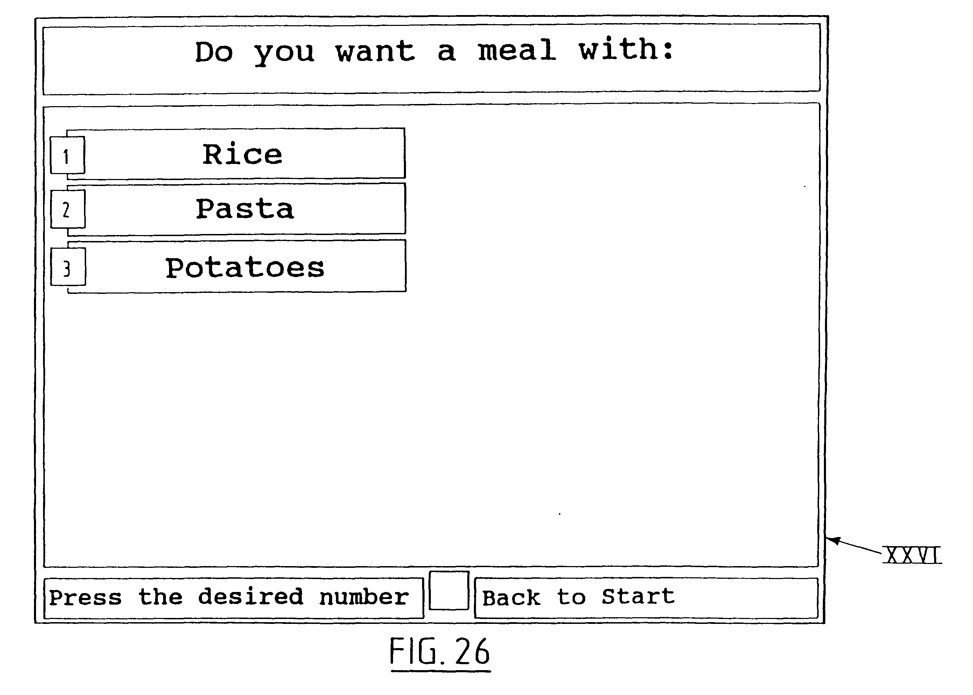

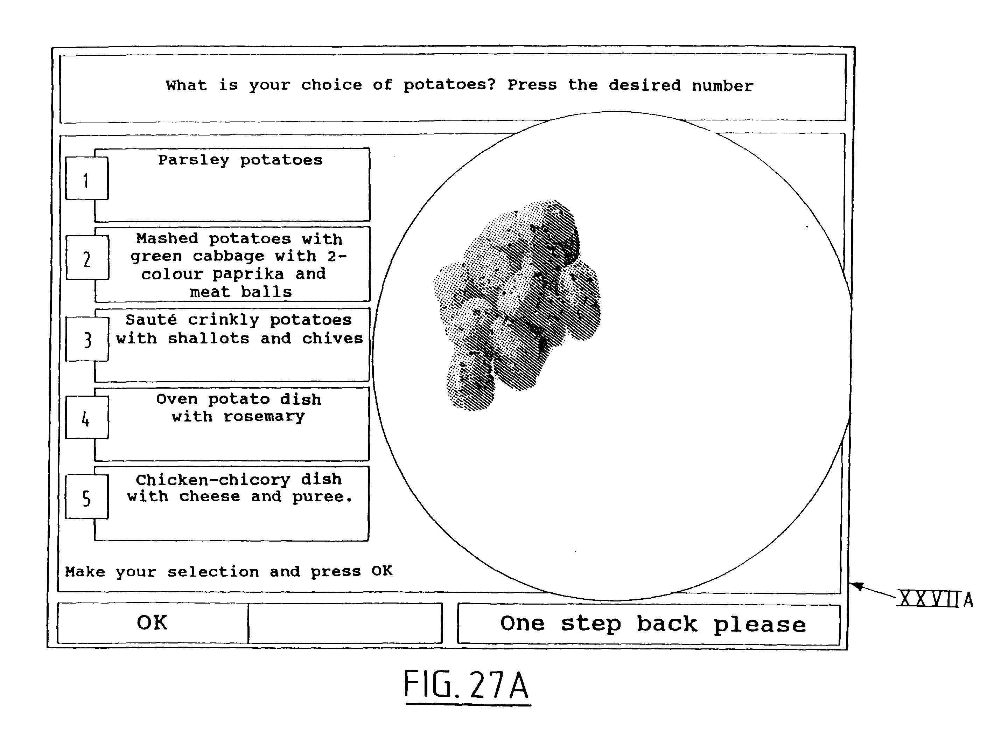

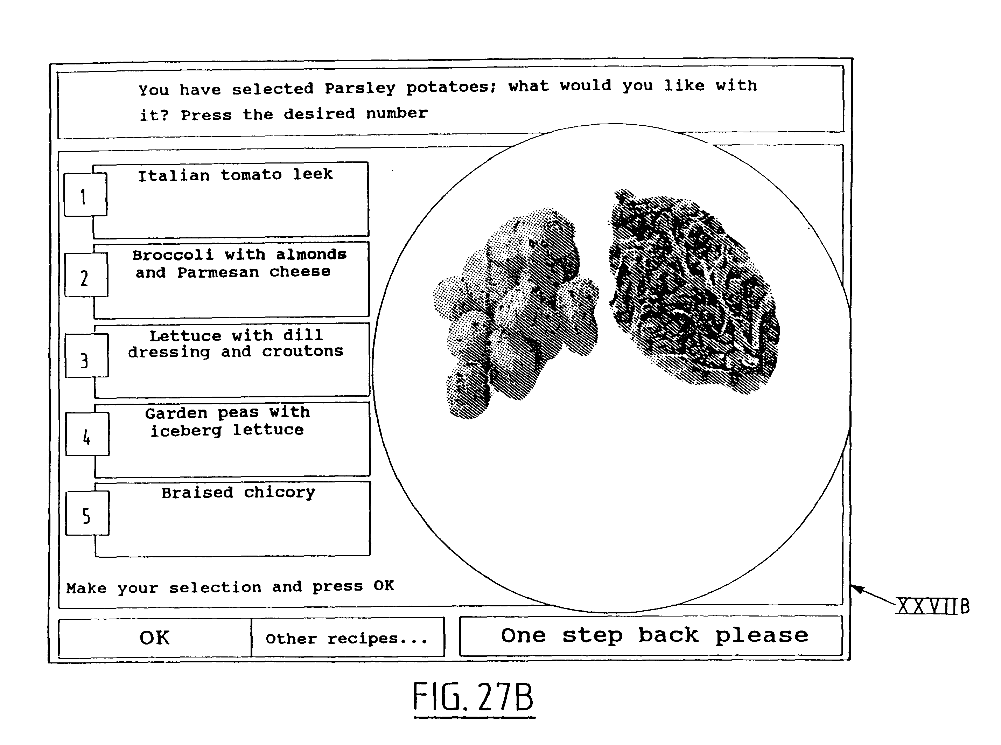

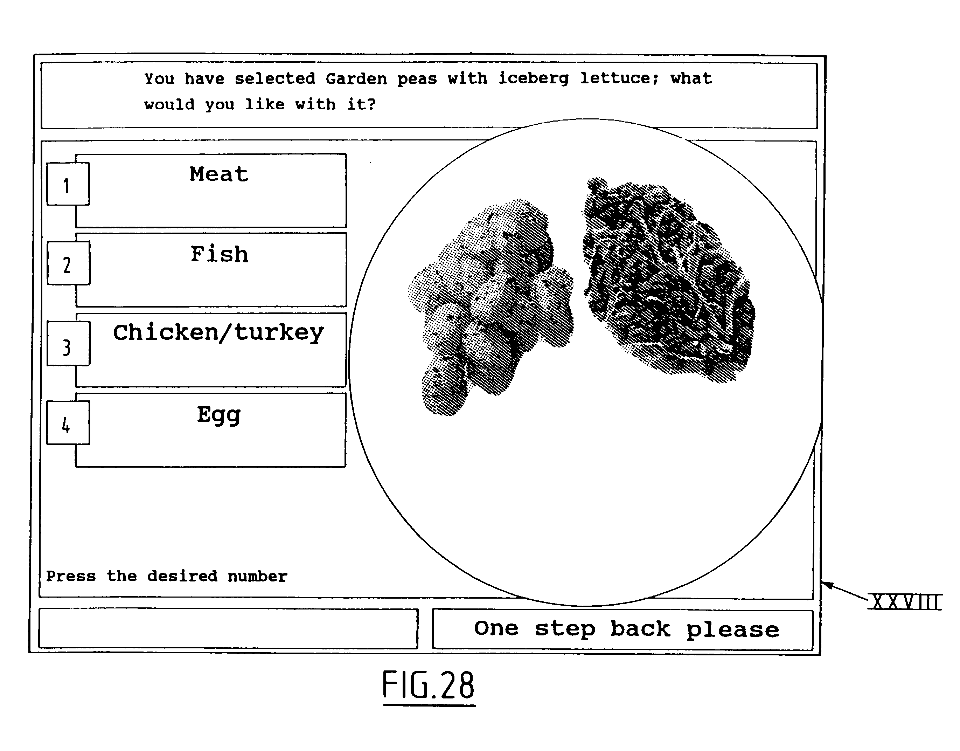

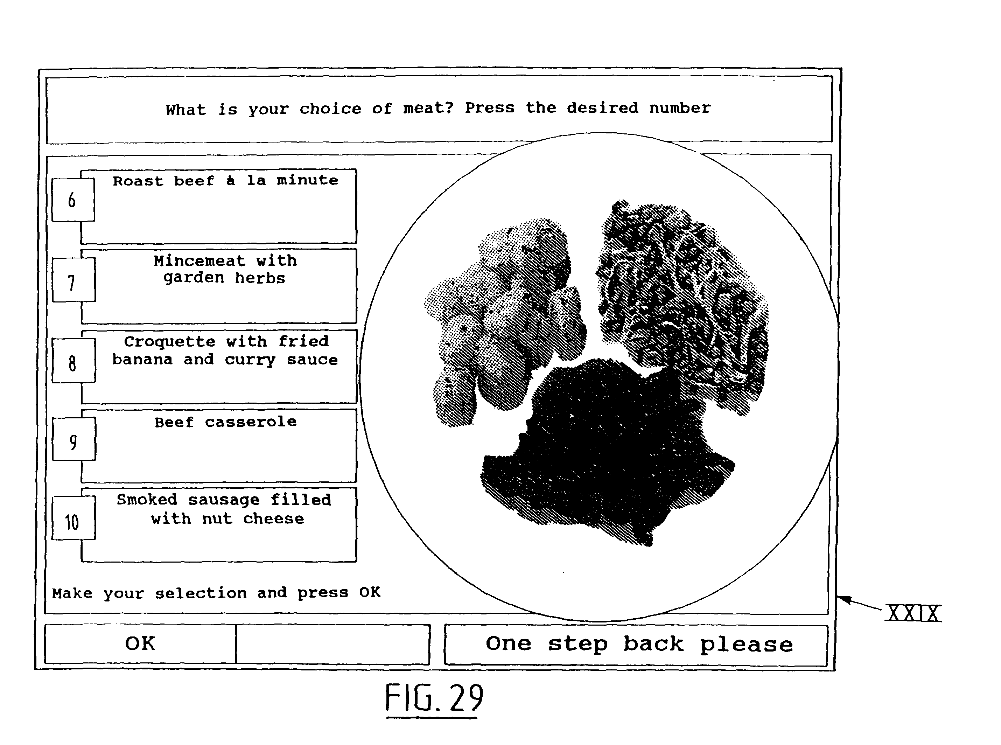

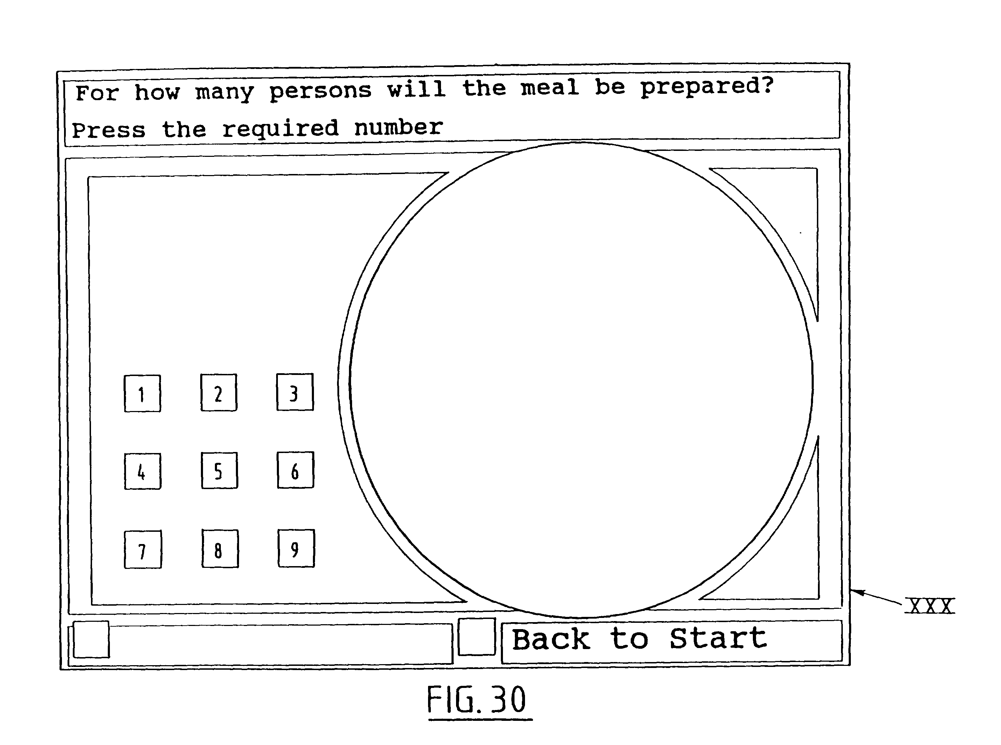

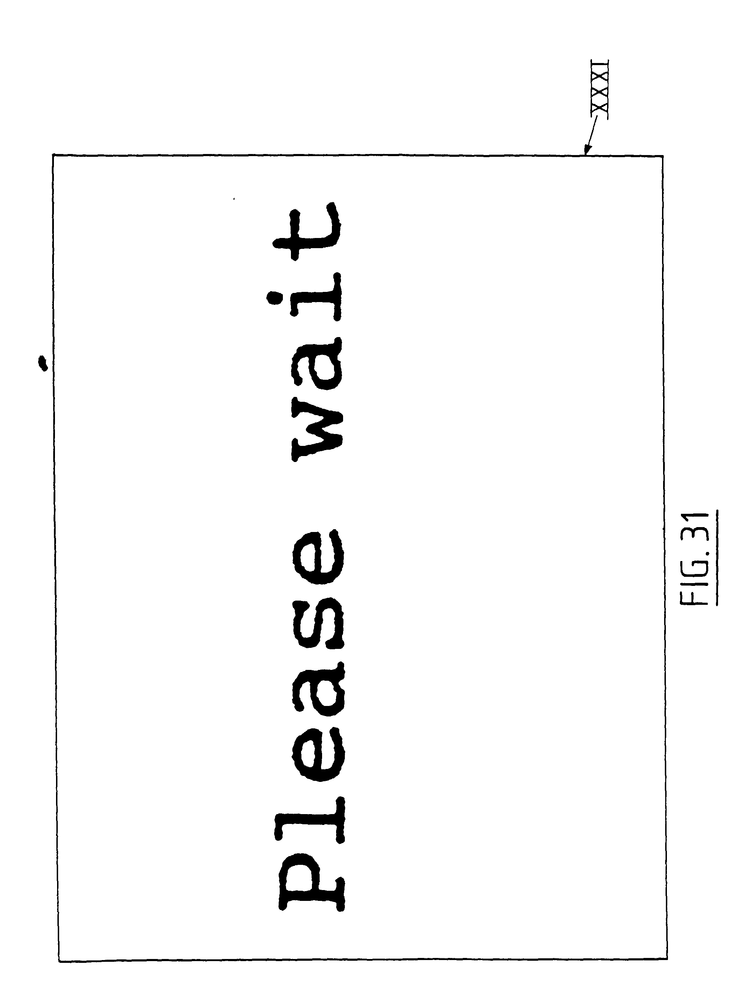

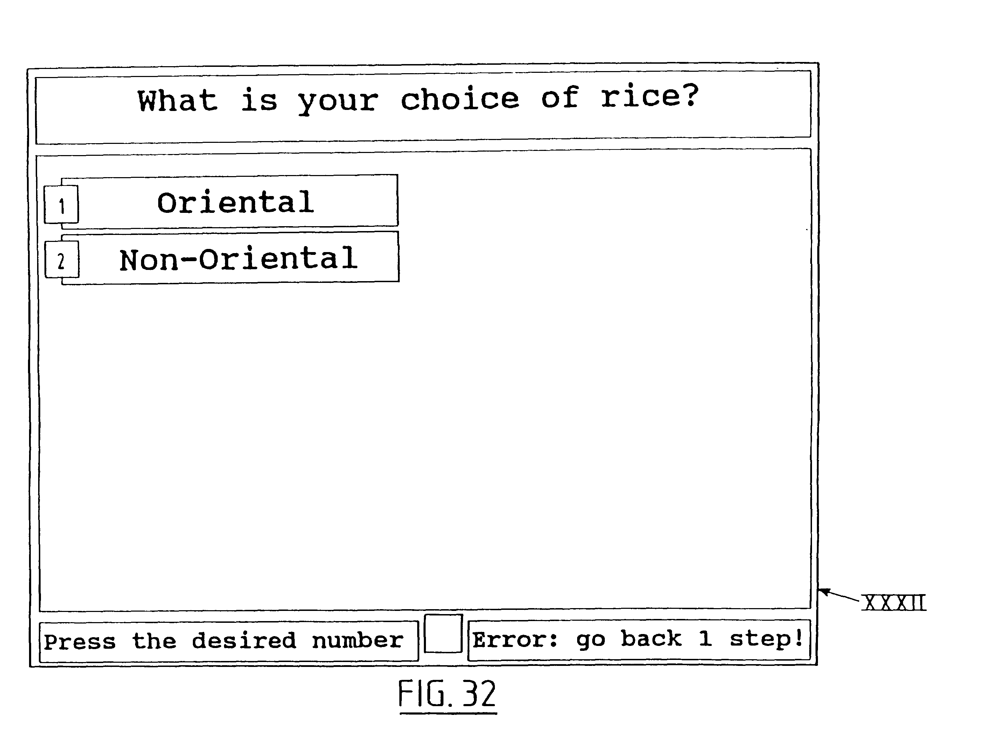

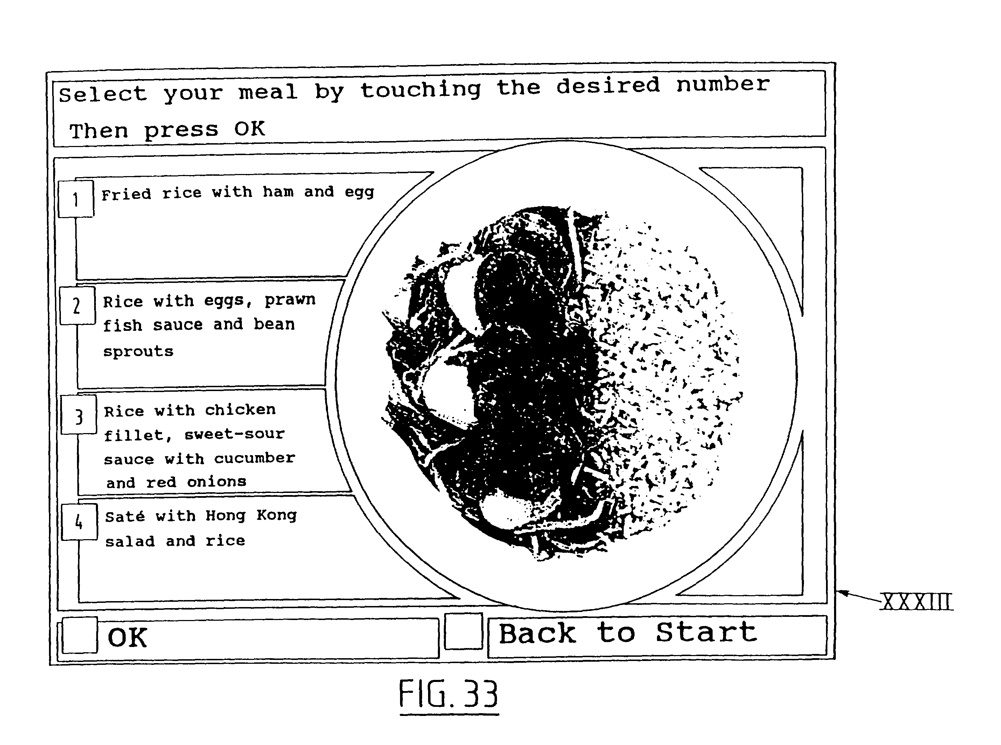

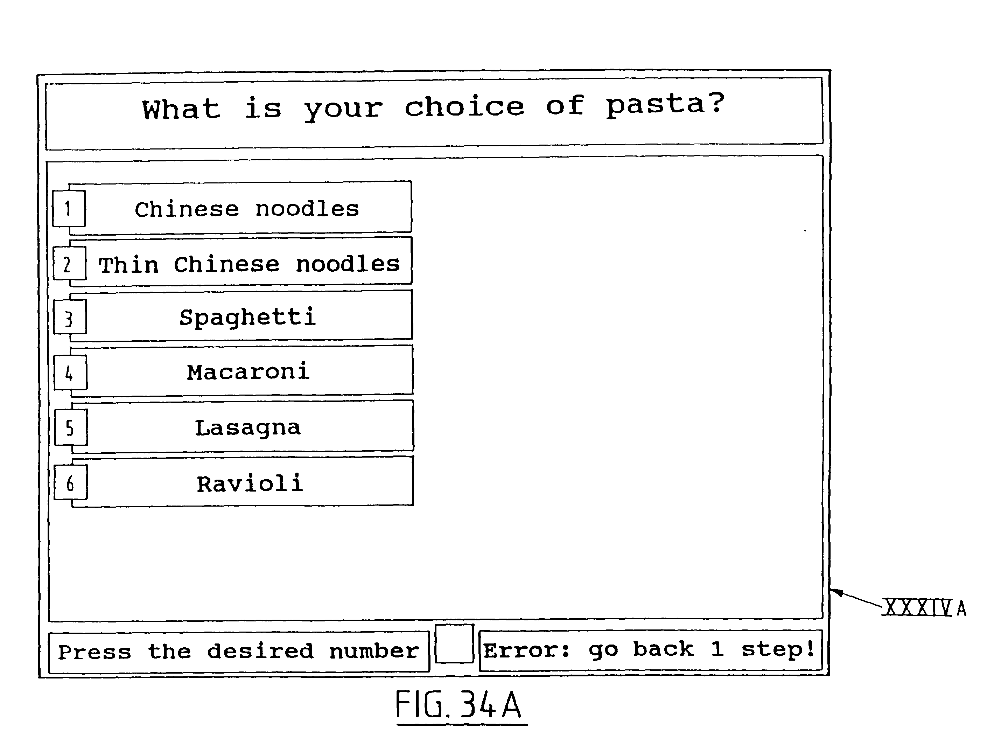

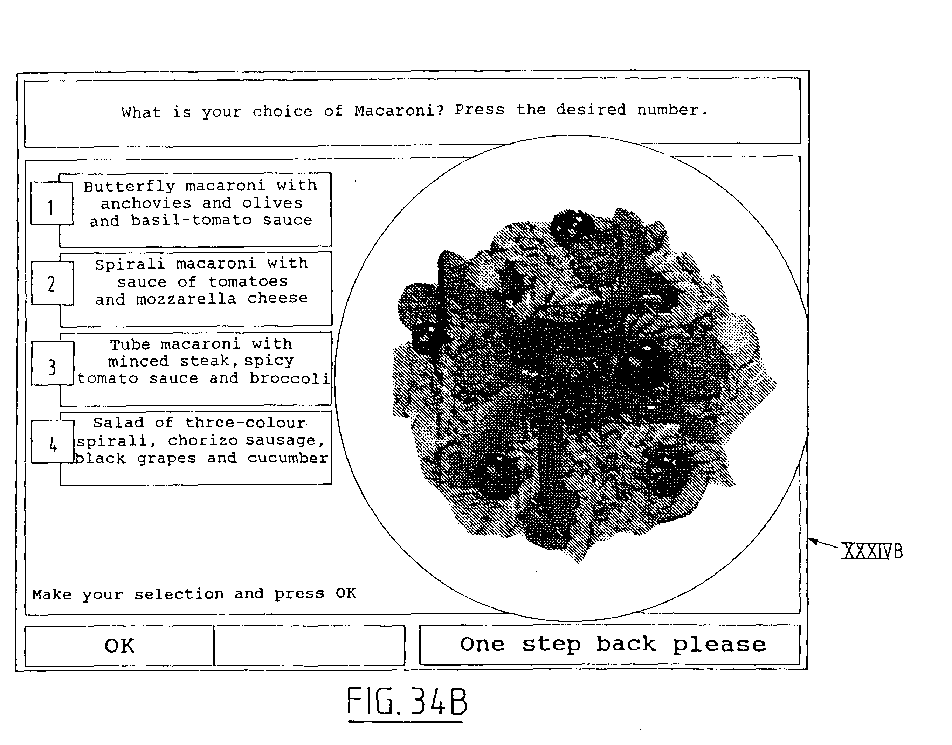

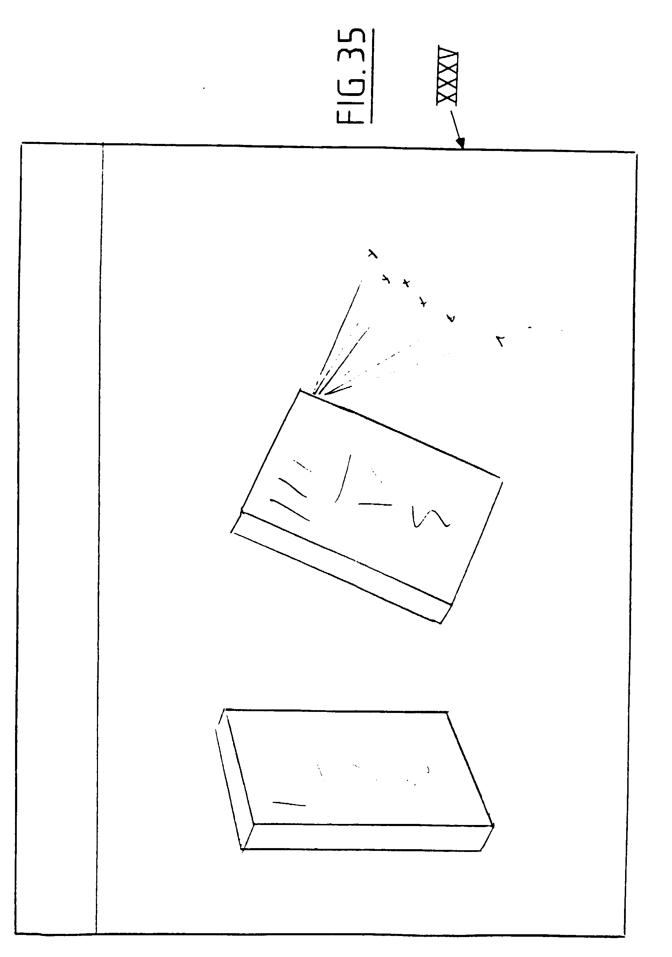

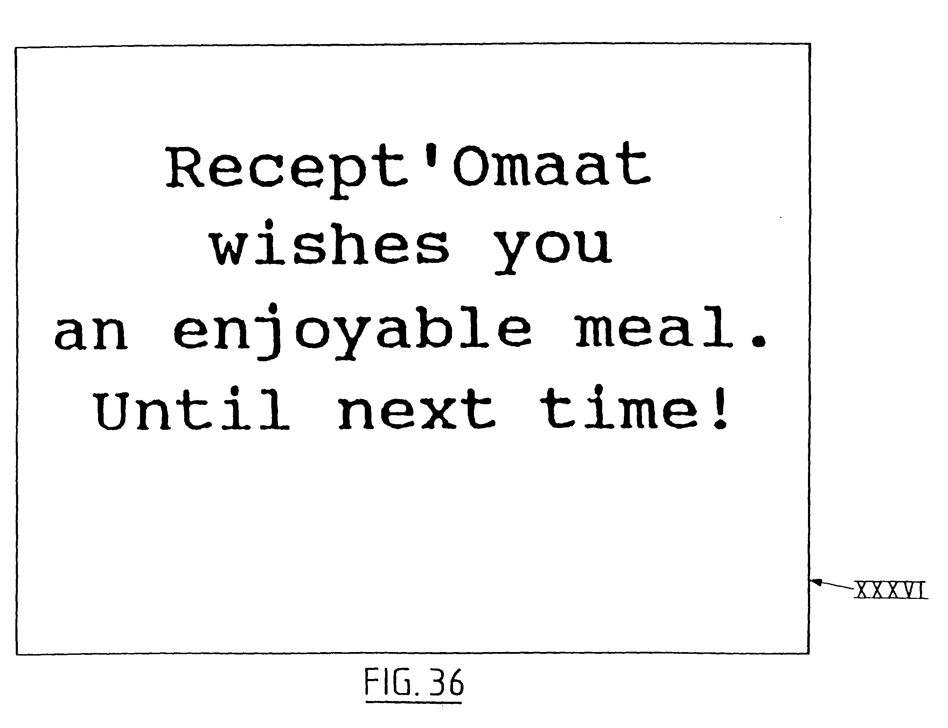

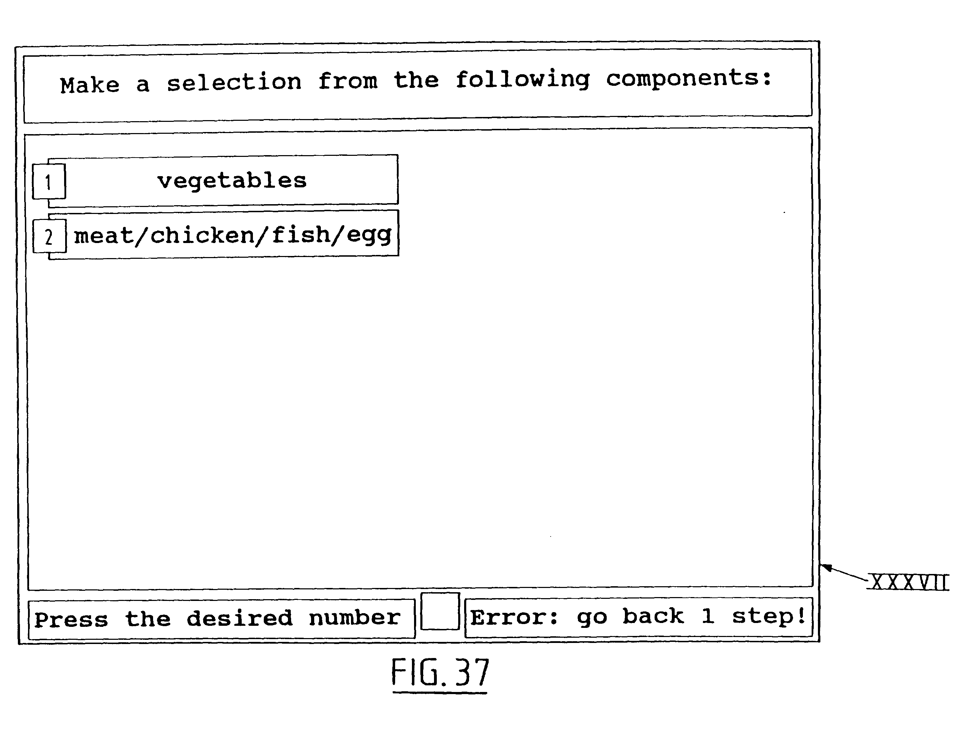

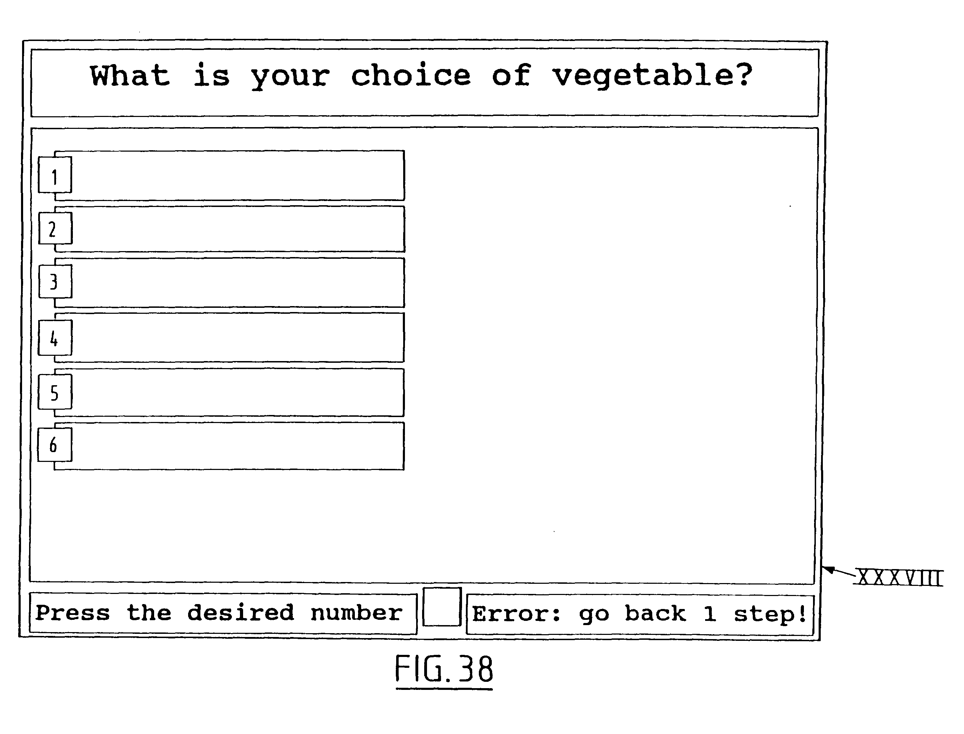

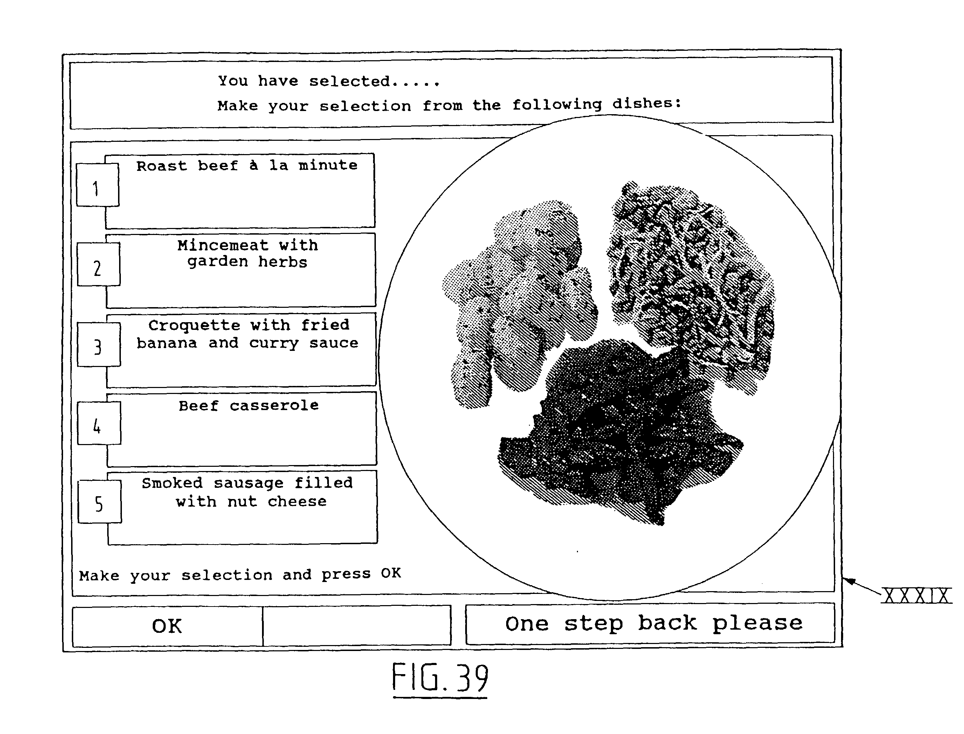

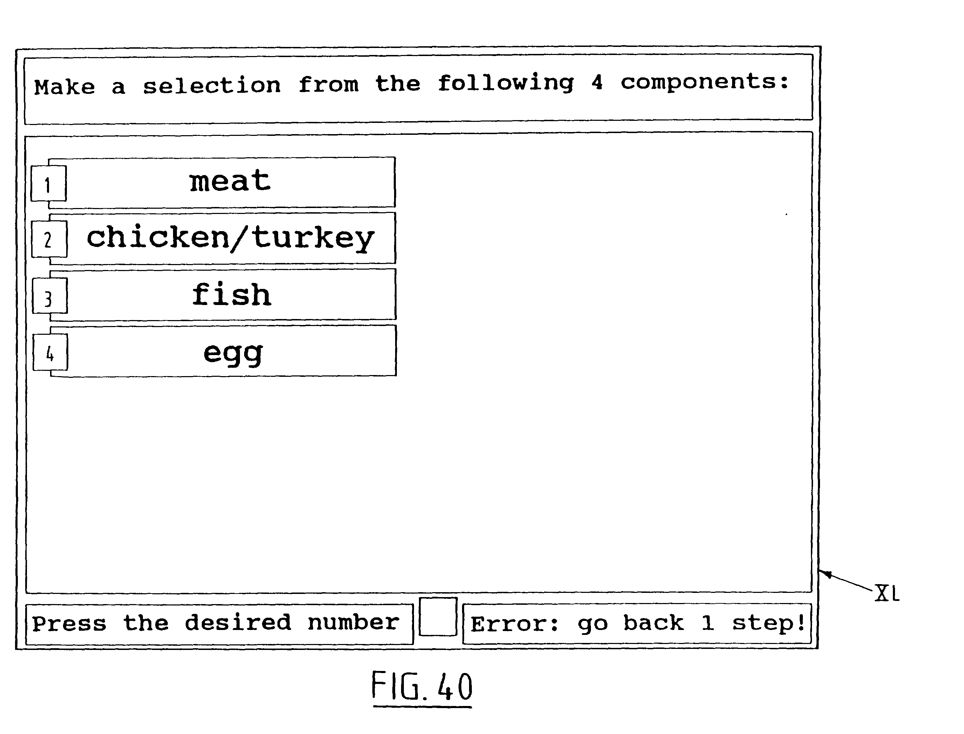

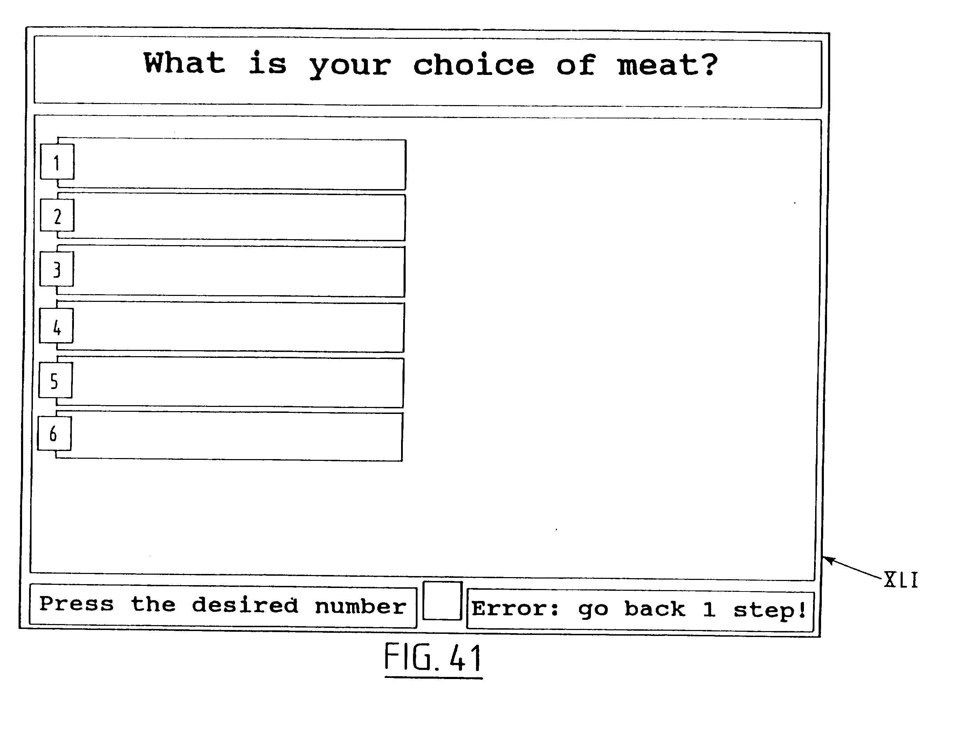

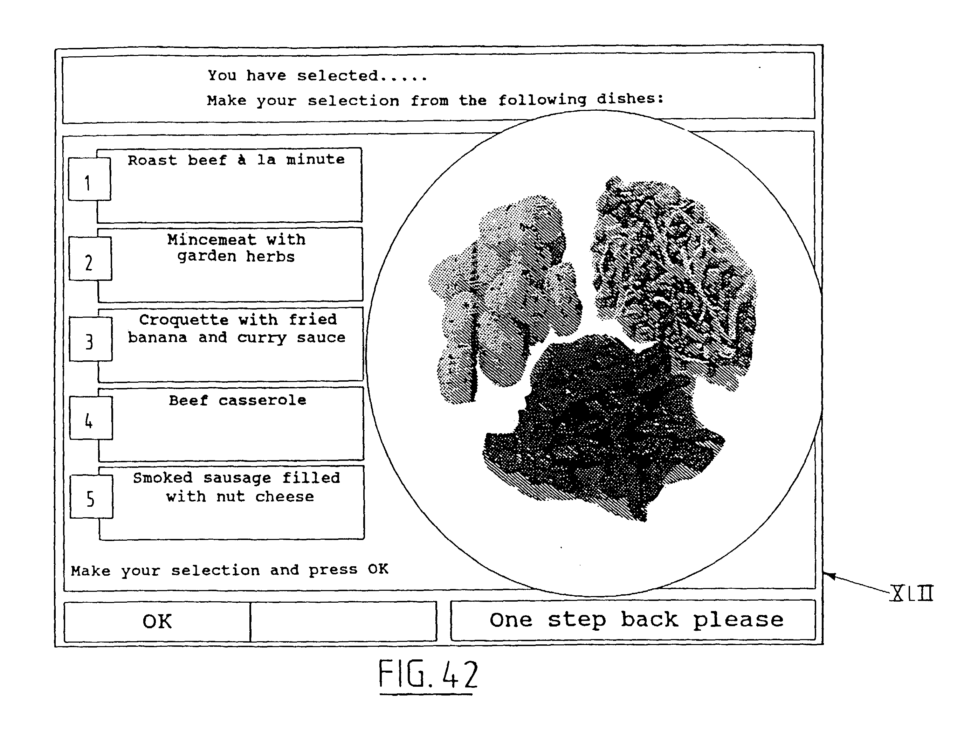

Figures 21-42 relate to the alternative possibility that the consumer has a particular ingredient in mind and wishes to receive a ready-to-use recipe therefor. This situation can for instance occur in the case where the store in which the apparatus according to the invention is placed is temporarily offering a determined article at a reduced price or where the consumer has a determined stock of a certain article available at home.

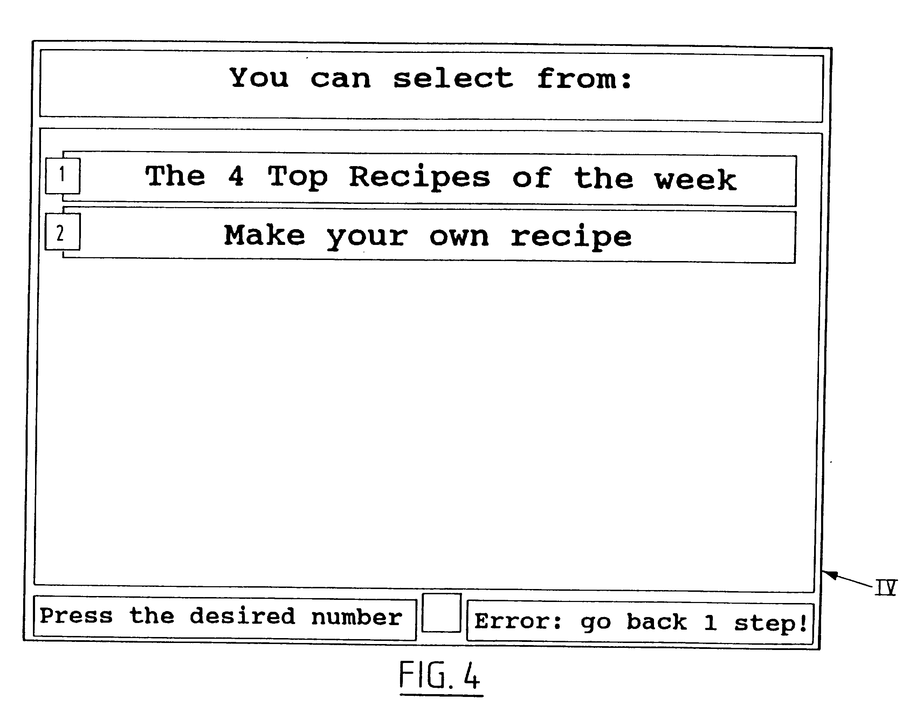

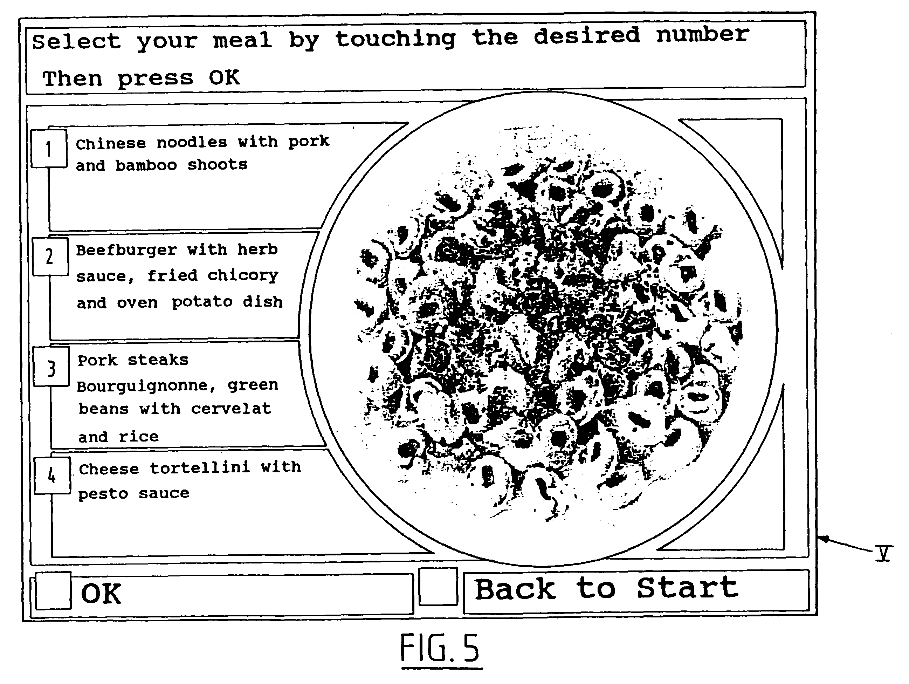

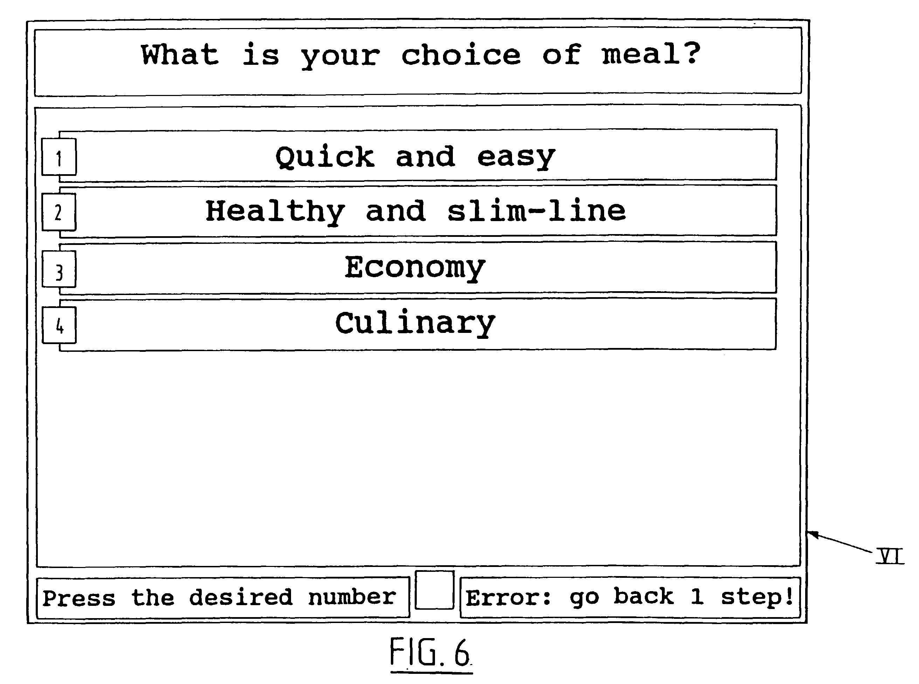

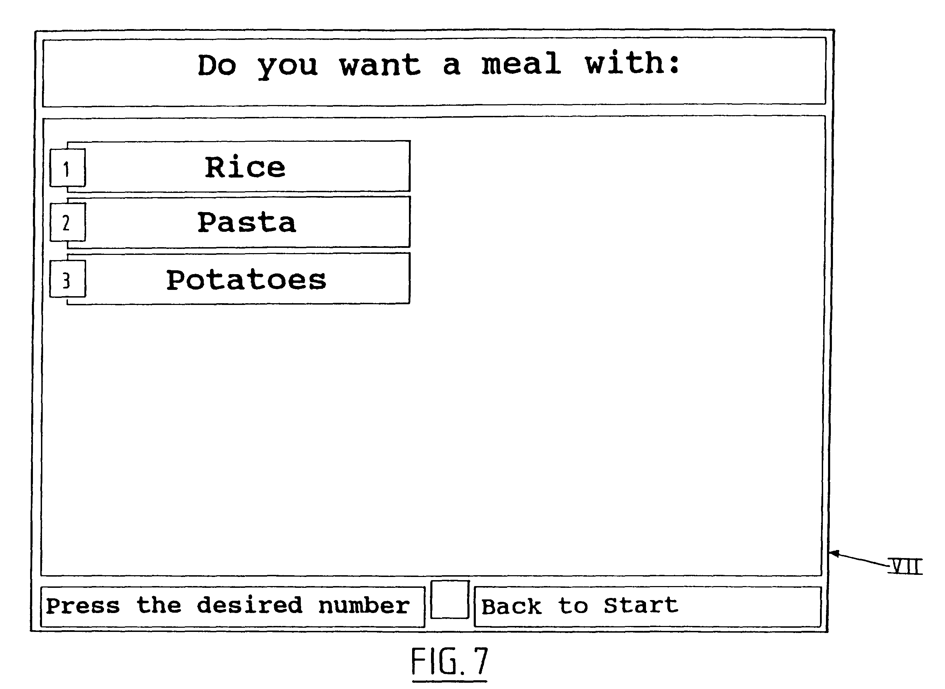

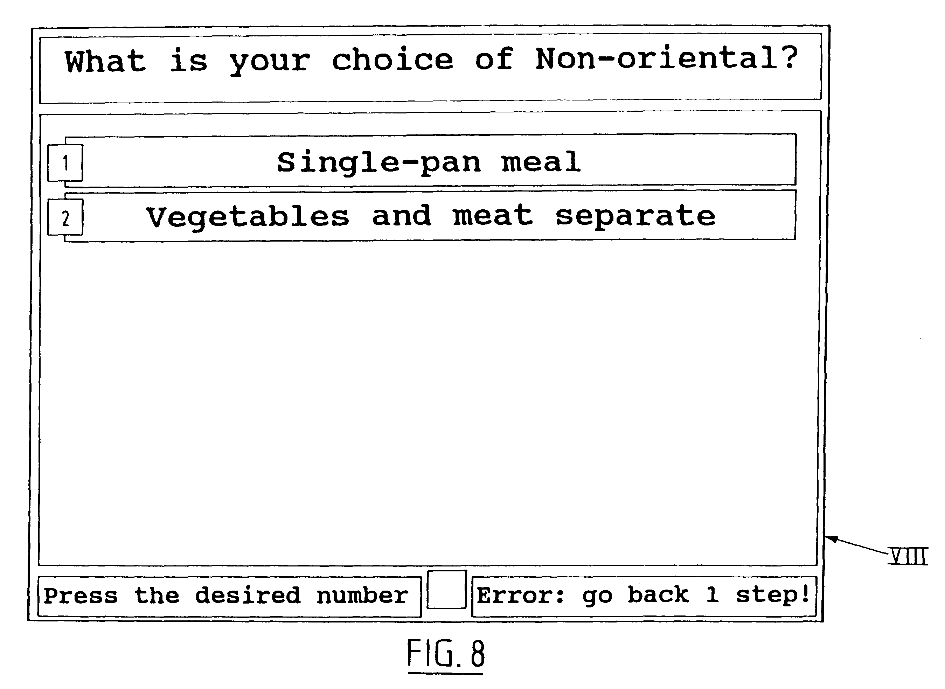

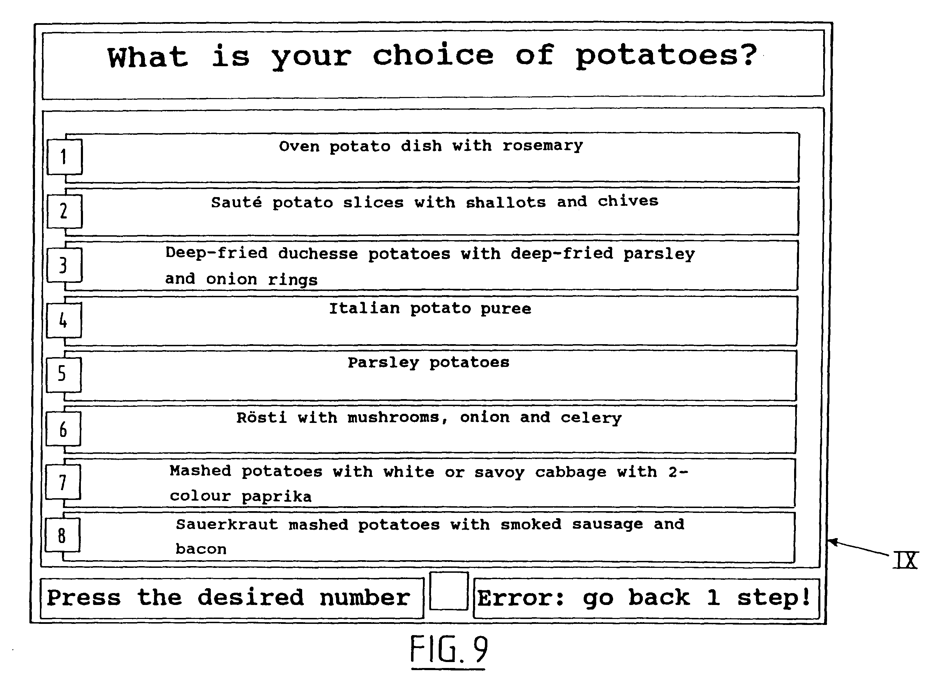

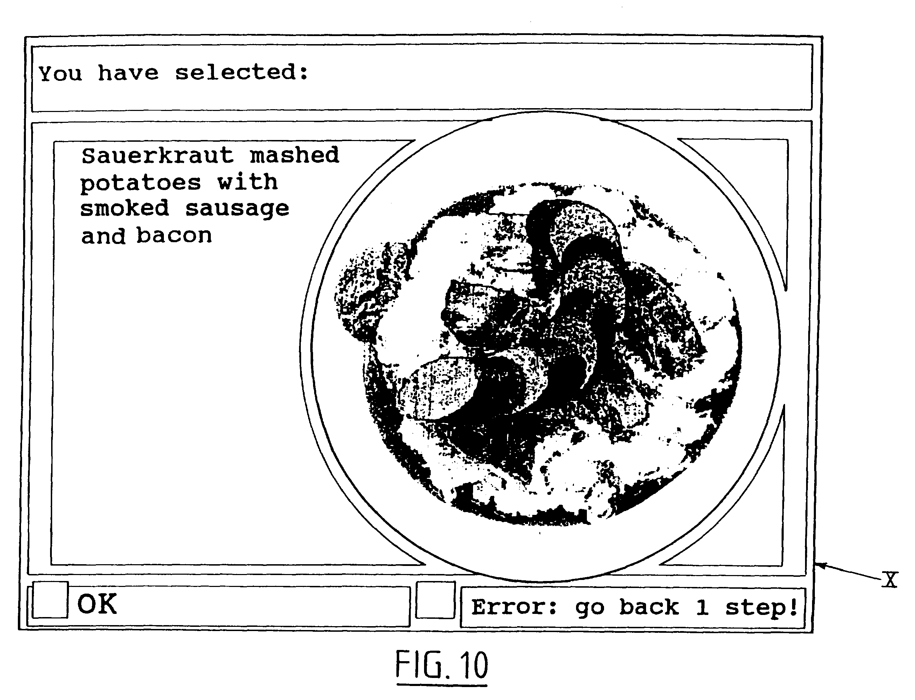

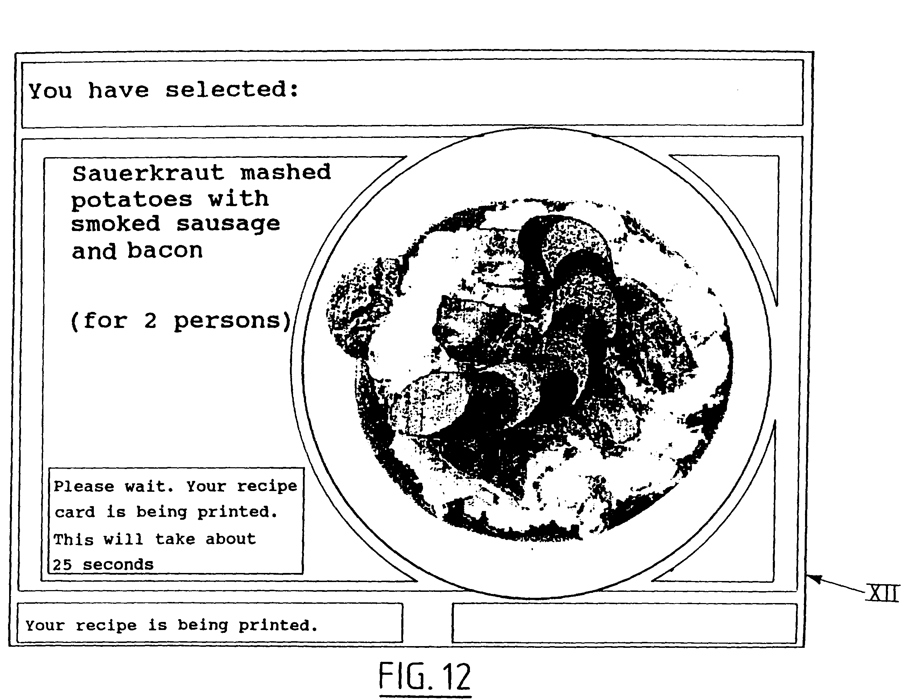

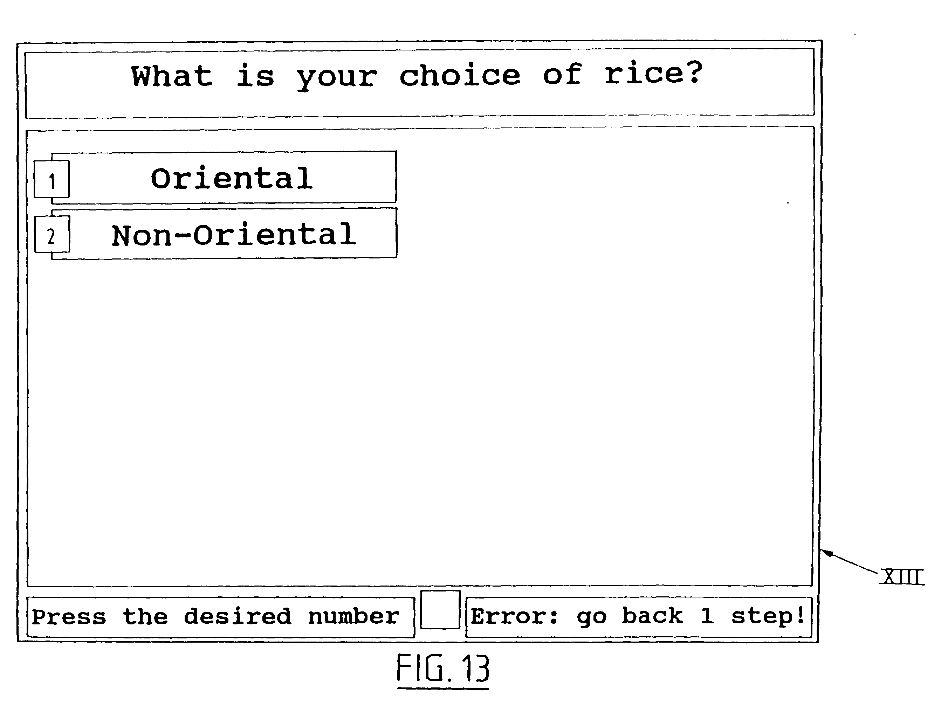

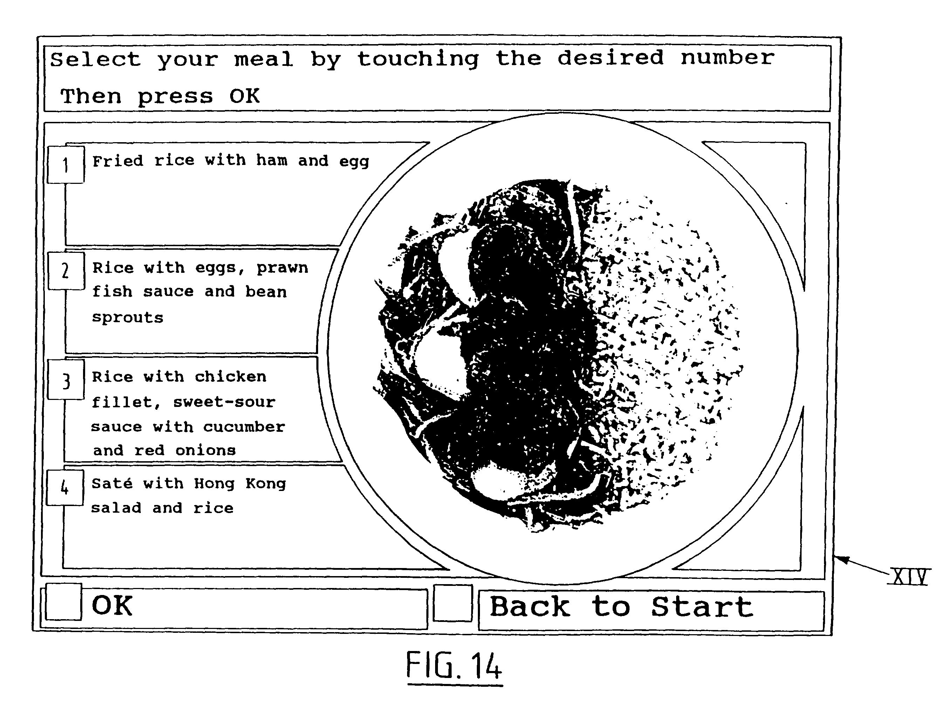

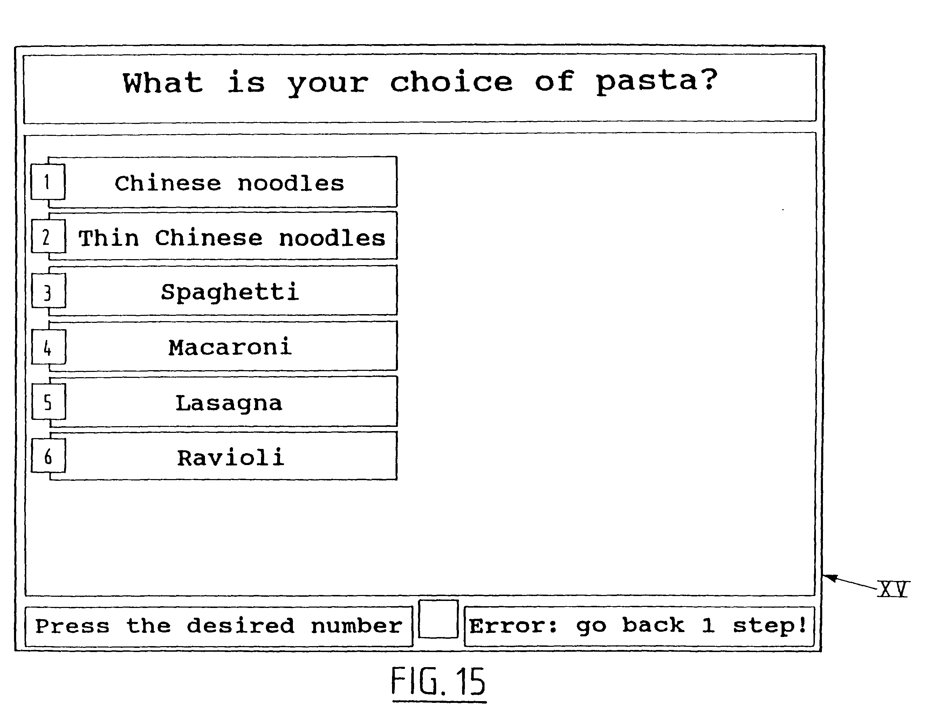

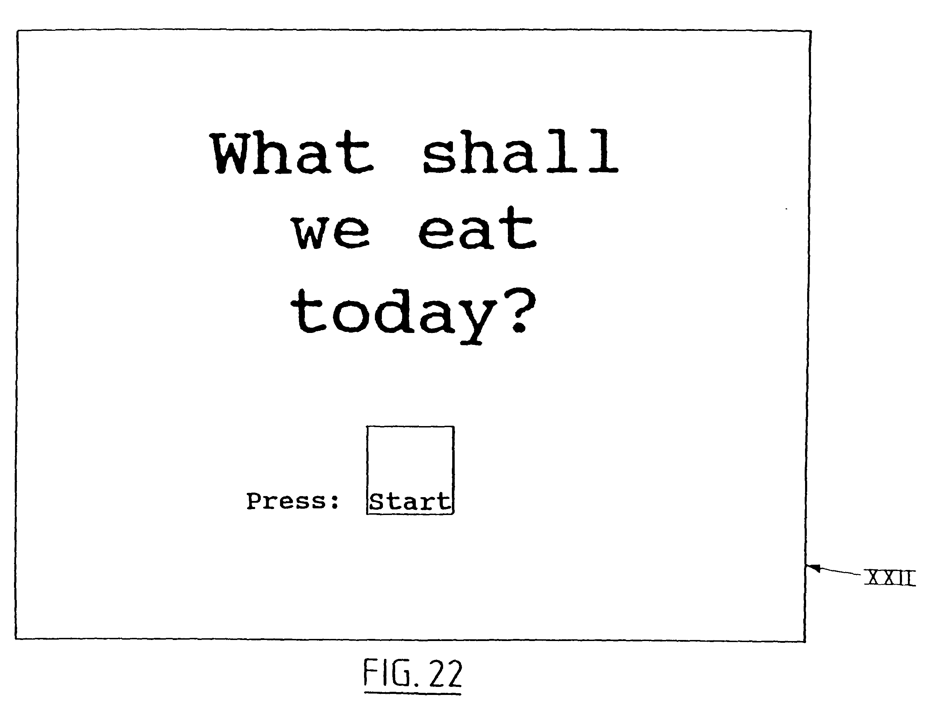

After the description of the figures 1-20 an extensive description of figure 21 and the corresponding figures 22-42 will be superfluous.

It will be apparent from the description given above that the invention provides an apparatus which can be operated very simply by any purchaser and that the information provided by the apparatus makes it very easy for the purchaser to do the necessary shopping and prepare the selected dishes.

## Claims

1. Interactive information selection apparatus (1), comprising:
memory means in which all necessary information relating to at least one dish consisting of a number of components is stored spread over a number of hierarchical levels;
first display means (2) for displaying in each case a list of options corresponding with one level, one of which options at a time can be selected by a user;
selection means (5) which can be operated by a user and which are adapted, after a start instruction and on the basis of menu control, to address that part of the memory containing partial information relating to the selected option;
which memory means are adapted to activate the following level after addressing of the said memory part until the final level is reached and are also adapted to store each selected option; and
second display means (2) for displaying all relevant information present in the memory corresponding with all selected options.

2. Apparatus as claimed in claim 1, wherein the first display means comprise a screen (2).

3. Apparatus as claimed in claim 1, wherein the screen (2) is a touch screen and also forms part of the selection means (5).

4. Apparatus as claimed in claim 1, wherein the second display means comprise a printer for generating a copy on paper of the said relevant information.

5. Apparatus as claimed in claim 4, wherein the said relevant information comprises information about the wares, products and/or articles to be purchased and information concerning method(s) of preparation.

6. Apparatus as claimed in claim 4, wherein the said relevant information comprises information about prices.

7. Apparatus as claimed in claim 4, wherein the said relevant information comprises information concerning the composition of the products and/or articles and/or the nutritional properties thereof.

8. Apparatus as claimed in claim 4, wherein the said relevant information comprises information concerning the location in the store or supermarket in which the apparatus is situated where the user can find the relevant products and/or articles.

9. Apparatus as claimed in claim 8, wherein the said relevant information contains information concerning the for instance shortest route to be followed by a user through the store or supermarket.

10. Apparatus as claimed in claim 4, wherein the printer can also print a discount card for discounting when payment is made for the purchased products and/or articles.

11. Apparatus as claimed in claim 6, wherein the apparatus is coupled to a central stock control and administration computer.

12. Apparatus as claimed in claim 2, wherein the second display means (2) are also the first display means (2), photos of prepared components of dishes are included in the memory and after a selection the associated photo is ready for display on the screen such that after the final selection has been made the photos are displayed as composite photo on the screen.

13. Apparatus as claimed in claim 10, wherein the printer can print on the discount card a bar code or the like readable by an automatically operating cash-point.

14. Apparatus as claimed in claim 1, wherein the apparatus comprises hardware interacting with program means.

## Patentansprüche

1. Interaktive Vorrichtung (1) zur Auswahl von Informationen mit den folgenden Merkmalen:
ein Speicher, in dem die gesamte notwendige Information, die sich auf wenigstens ein aus mehreren Komponenten zusammengesetztes Gericht bezieht, ausgebreitet über mehrere Hierarchie-Stufen gespeichert wird;
ein erstes Display (2), welches jeweils eine Liste von Optionen zeigt, die einer Stufe entsprechen, wobei jeweils eine Option durch den Benutzer ausgewählt werden kann;
eine Wählvorrichtung (5), die vom Benutzer betätigt werden kann und die nach einer Startinstruktion und auf der Basis einer Menu-Steuerung jenen Teil des Speichers adressiert, der die jeweilige Information enthält, die sich auf die gewählte Option bezieht;
der Speicher ist derart beschaffen, daß die folgende Stufe aktiviert wird, nachdem der jeweilige Speicherteil adressiert ist, bis die Endstufe erreicht ist, und der Speicher ist außerdem derart eingerichtet, daß er jede gewählte Option speichert; und
ein zweites Display (2) zur Darstellung der gesamten relevanten Information, die im Speicher vorhanden ist und allen gewählten Optionen entspricht.

2. Vorrichtung nach Anspruch 1, bei der das erste Display einen Schirm (2) aufweist.

3. Vorrichtung nach Anspruch 1, bei welcher der Schirm (2) ein Berührungsschirm ist und einen Teil der Wählvorrichtung (5) bildet.

4. Vorrichtung nach Anspruch 1, bei welcher das zweite Display einen Drucker aufweist, um eine Kopie der relevanten Information auf einem Papier auszudrucken.

5. Vorrichtung nach Anspruch 4, bei welcher die relevante Information eine Information über die Waren, Produkte und/oder Artikel enthält, die verkauft werden und außerdem eine Information betreffend das Verfahren oder die Verfahren zur Zubereitung.

6. Vorrichtung nach Anspruch 4, bei welcher die relevante Information eine Information über die Preise enthält.

7. Vorrichtung nach Anspruch 4, bei welcher die relevante Information eine Information bezüglich der Zusammensetzung der Produkte und/oder Artikel und/oder bezüglich der Nährwerteigenschaften enthält.

8. Vorrichtung nach Anspruch 4, bei welcher die relevante Information eine Information bezüglich des Ortes in dem mit der Vorrichtung ausgerüsteten Geschäft oder Supermarkt enthält, an dem der Benutzer die relevanten Produkte und/oder Gegenstände finden kann.

9. Vorrichtung nach Anspruch 8, bei welcher die relevante Information einen Hinweis, beispielsweise über den kürzesten Weg enthält, dem der Benutzer folgen muß, um im Geschäft oder im Supermarkt zu dem betreffenden Ort zu gelangen.

10. Vorrichtung nach Anspruch 4, bei welcher der Drucker außerdem eine Discount-Karte ausdrucken kann, um einen Rabatt zu gewähren, wenn die gekauften Produkte und/oder Gegenstände bezahlt werden.

11. Vorrichtung nach Anspruch 6, bei welcher die Vorrichtung mit einem zentralen Lagerüberwachungs- und Administrationscomputer gekoppelt ist.

12. Vorrichtung nach Anspruch 2, bei welcher das zweite Display (2) auch das erste Display (2) aufweist, wobei Photos der bereiteten Komponenten von Gerichten im Speicher enthalten sind und nach Wahl das zugeordnete Photo bereit zur Darstellung auf dem Schirm ist, so daß nach Vollendung der Wahl die Photos als zusammengesetztes Photo auf dem Schirm dargestellt werden.

13. Vorrichtung nach Anspruch 10, bei welcher der Drucker die Discount-Karte mit einem Barcode oder dergleichen ausdruckt, der durch eine automatisch arbeitende Kasse lesbar ist.

14. Vorrichtung nach Anspruch 1, bei welcher die Vorrichtung eine Hardware aufweist, die mit einer Programmiervorrichtung zusammenwirkt.

## Revendications

1. Appareil interactif (1) de sélection d'informations, comprenant :
des moyens formant mémoire dans lesquels toutes les informations nécessaires concernant au moins un plat, composé d'un certain nombre d'ingrédients, sont stockées en étant réparties selon un certain nombre de niveaux hiérarchiques ;
des premiers moyens d'affichage (2) servant à afficher dans chaque cas une liste de choix correspondant à un niveau, un utilisateur pouvant sélectionner un de ces choix à la fois ;
des moyens de sélection (5) pouvant être actionnés par un utilisateur et adaptés, après une instruction de démarrage et sur la base d'un menu, à consulter la partie de la mémoire qui renferme des informations partielles concernant le choix sélectionné ;
les moyens formant mémoire étant adaptés à activer le niveau suivant après avoir consulté la partie de mémoire jusqu'à ce que le dernier niveau soit atteint, ainsi qu'à stocker chacun des choix sélectionnés ; et
des deuxièmes moyens d'affichage (2) servant à afficher l'ensemble des informations utiles présentes dans la mémoire et correspondant à tous les choix sélectionnés.

2. Appareil selon la revendication 1, dans lequel les premiers moyens d'affichage comprennent un écran (2).

3. Appareil selon la revendication 1, dans lequel l'écran (2) est un écran tactile, et fait également partie des moyens de sélection (5).

4. Appareil selon la revendication 1, dans lequel les deuxièmes moyens d'affichage comprennent une imprimante destinée à produire une copie papier des informations utiles.

5. Appareil selon la revendication 4, dans lequel les informations utiles comprennent des informations sur les denrées, produits et/ou articles qui doivent être achetés et des informations concernant les méthodes de préparation.

6. Appareil selon la revendication 4, dans lequel les informations utiles comprennent des informations sur les prix.

7. Appareil selon la revendication 4, dans lequel les informations utiles comprennent des informations sur la composition des produits et/ou articles et/ou leurs propriétés nutritionnelles.

8. Appareil selon la revendication 4, dans lequel les informations utiles comprennent des informations sur l'emplacement, dans le magasin ou le supermarché où se trouve l'appareil, où l'utilisateur peut trouver les produits et/ou articles concernés.

9. Appareil selon la revendication 8, dans lequel les informations utiles comprennent des informations sur le trajet, par exemple le trajet le plus court, que doit suivre un utilisateur à travers le magasin ou le supermarché.

10. Appareil selon la revendication 4, dans lequel l'imprimante peut également imprimer une carte de réduction pour procéder à des réductions lorsque le paiement est effectué pour les produits et/ou articles achetés.

11. Appareil selon la revendication 6, dans lequel l'appareil est couplé à un ordinateur central de gestion des stocks et d'administration.

12. Appareil selon la revendication 2, dans lequel les deuxièmes moyens d'affichage (2) sont également les premiers moyens d'affichage (2), des photos d'ingrédients préparés de plats sont contenues dans la mémoire et, après une sélection, la photo associée est prête à être affichée à l'écran de telle sorte qu'une fois que la sélection finale a été faite, les photos sont affichées sous forme de photo composite à l'écran.

13. Appareil selon la revendication 10, dans lequel l'imprimante peut imprimer, sur la carte de réduction, un code barre ou similaire, susceptible d'être lu par une caisse automatique.

14. Appareil selon la revendication 1, dans lequel l'appareil comprend du matériel interagissant avec des moyens formant programmes.
